# FASCICULE DE BREVET EUROPEEN

(11) **EP 4 027 941 B1**
(45) Date de publication et mention de la délivrance du brevet: **05.07.2023**
(21) Numéro de dépôt: 20771269.6
(22) Date de dépôt: 09.09.2020
(51) Int. Cl.: A61D 19/02, A61D 19/00, A61D 99/00, A01N 1/02

(54) **ENSEMBLE POUR MANIPULER UNE PLURALITÉ DE PAILLETTES DE CONDITIONNEMENT DE SEMENCE ANIMALE**
VORRICHTUNG ZUM HANDHABEN VON MEHREREN HALMEN ZUM VERPACKEN VON TIERSAMEN
ASSEMBLY FOR HANDLING MULTIPLE STRAWS FOR PACKAGING ANIMAL SEMEN

(30) Priorité: 09.09.2019 FR 1909905
(43) Date de publication de la demande: 20.07.2022
(73) Titulaire: IMV Technologies, 61300 Saint-Ouen-sur-Iton (FR)
(72) Inventeur: SCHMITT, Eric, 53700 VILLAINES-LA-JUHEL (FR); DOUESNEL, Jean-Louis, 27160 BRETEUIL-SUR-ITON (FR); GORGES, Jean-Charles, 72610 CHENAY (FR)
(74) Mandataire: Santarelli
(86) Numéro de dépôt international: PCT/EP2020/075222
(87) Numéro de publication internationale: WO 2021/048220

(56) Documents cités:
- EP-A2- 2 450 648

## Description

### Domaine technique de l'invention

L'invention concerne la conservation de la semence animale.

### Etat de la technique

On sait que pour certaines espèces animales, notamment les bovins et les équins, on traite la semence après prélèvement en la diluant puis la semence diluée est subdivisée en doses remplissant chacune une paillette formée par un tube mince en matière plastique et par un bouchon engagé dans ce tube, la dose de semence étant disposée entre le bouchon et l'extrémité du tube la plus éloignée du bouchon, le tronçon d'extrémité correspondant étant obturé après remplissage par écrasement et soudage.

La conservation des doses de semence contenues dans les paillettes se fait par immersion des paillettes dans un bain d'azote liquide.

Avant cette immersion, les paillettes sont congelées en étant placées dans un congélateur où circule un flux de vapeur d'azote liquide.

En pratique, pour congeler les paillettes on en dispose une pluralité sur un rack appelé rampe de congélation puis la rampe de congélation portant les paillettes est introduite dans le congélateur. En général, le congélateur est dimensionné pour recevoir plusieurs rampes de congélation superposées.

On connait déjà une telle rampe de congélation dans le document EP2450648 qui comporte deux parois dentées longeant un espace libre central, chaque paroi dentée présentant une denture à son sommet, les dentures des parois dentées étant identiques avec chaque creux délimité par une surface ayant une courbure selon le diamètre des paillettes.

Afin d'aider l'opérateur à disposer les paillettes sur la rampe de congélation, on connait déjà un élément de support, en général appelé calibre, qui comporte une platine et deux joues liées rigidement à la platine, laquelle a une largeur inférieure à la longueur des paillettes et comporte une surface cannelée présentant une pluralité de gorges semblables chacune orientée dans la direction de la largeur de la platine et chacune délimitée par une surface ayant une courbure selon le diamètre des paillettes, les gorges étant disposées côte à côte selon le même pas que les dentures de la rampe de congélation. L'élément de support et la rampe de congélation sont configurés pour que l'élément de support puisse s'insérer dans l'espace libre central de la rampe de congélation. Les joues sont configurées pour que l'élément de support puisse être placé sur une surface de réception horizontale avec la surface cannelée située en haut de la platine à un niveau prédéterminé au-dessus de la surface de réception. Chaque joue comporte une partie centrale ainsi qu'une première partie saillante et une seconde partie saillante s'étendant chacune d'un côté de la partie centrale, ces parties saillantes étant prévues pour recevoir la base de la rampe de congélation dont les dentures se trouvent alors sous la surface cannelée.

Dans cette position, l'opérateur place les paillettes en vrac sur la surface cannelée et les étale sur celle-ci pour que chaque paillette se loge dans une des gorges.

Comme la platine a une largeur inférieure à la longueur des paillettes, l'opérateur peut agencer les paillettes de sorte que chacune a un tronçon d'extrémité qui saille de ladite platine de chaque côté.

La rampe de congélation est alors soulevée et récupère les paillettes dont chacune présente alors de chaque côté un tronçon d'extrémité reçu dans un creux de l'une des dentures.

On sait qu'il convient de ne pas mélanger des paillettes contenant de la semence provenant d'animaux différents, par exemple de taureaux différents pour de la semence bovine.

Pour éviter des mélanges dans le cas où doivent être disposées sur une rampe de congélation des paillettes contenant de la semence provenant de deux animaux différents, on laisse en général un espace assez important, correspondant à l'emplacement prévu pour recevoir une dizaine de paillettes, entre les paillettes contenant de la semence de l'un des animaux et les paillettes contenant de la semence de l'autre animal.

Dans certains cas, lorsque des codes couleurs sont utilisés sur les paillettes pour identifier l'animal dont provient la semence (une certaine couleur pour chaque animal), on dispose dans l'espace laissé libre entre les paillettes d'un animal et les paillettes de l'autre animal, à un emplacement prévu pour recevoir une paillette, un jonc ayant une forme externe identique à celle d'une paillette et ayant la couleur correspondant à l'un des animaux.

### Exposé de l'invention

L'invention vise à permettre à un opérateur d'effectuer de façon simple, commode et économique les manipulations des paillettes congelées contenant de la semence provenant d'animaux différents.

L'invention propose à cet effet un ensemble comportant une rampe de congélation d'une pluralité de paillettes de conditionnement de semence animale ayant chacune un diamètre prédéterminé et une longueur prédéterminée, comportant une rampe de congélation présentant un rebord et un fond entourant un espace libre central, ledit fond comportant deux parois dentées qui s'étendent longitudinalement le long dudit espace central, chaque paroi dentée présentant une denture à son sommet comportant une succession de dents et de creux, les dentures desdites parois dentées étant identiques avec chaque creux délimité par une surface ayant une courbure selon ledit diamètre prédéterminé, caractérisé en ce qu'il comporte en outre une traverse comportant des parties mobiles les unes par rapport aux autres configurées pour admettre une position où ladite traverse est assujettie de façon amovible à ladite rampe de congélation à un emplacement prévu pour recevoir au moins une dite paillette.

Ainsi, pour séparer les paillettes dont la semence provient de deux animaux différents, plutôt que de laisser un simple espace libre, dans lequel figure éventuellement un jonc de couleur, l'ensemble selon l'invention prévoit une traverse agencée mécaniquement (avec des parties mobiles les unes par rapport aux autres) pour admettre une position où elle est assujettie de façon amovible à la rampe de congélation.

Une telle traverse, du fait qu'en service elle est mécaniquement assujettie à la rampe de congélation, offre davantage de sécurité en matière de prévention des erreurs de manipulation susceptible de conduire à des mélanges indésirables de paillettes.

Par ailleurs, une traverse pouvant être assujettie mécaniquement à la rampe de congélation ne nécessite qu'un espace modéré, par exemple correspondant à l'emplacement prévu pour trois paillettes, voire pour une seule paillette, ce qui permet donc de congeler davantage de paillettes sur la rampe puisque moins d'espace est perdu pour séparer les paillettes dont la semence provient d'animaux différents.

Selon des caractéristiques avantageuses :
- ladite traverse comporte une portion centrale et deux pattes saillant de part et d'autre de ladite portion centrale, lesdites pattes étant configurées pour coopérer avec au moins un creux de chacune des dentures, ladite traverse étant configurée pour admettre une position rétractée où lesdites pattes sont rapprochées l'une de l'autre et une position déployée où lesdites pattes sont maintenues à distance l'une de l'autre, ladite rampe et ladite traverse étant configurées pour que la traverse en position déployée soit assujettie à ladite rampe et pour que la traverse en position rétractée soit libre d'être enlevée de ladite rampe ;
- chaque patte comporte une rainure pourvue d'au moins une tige, chacune des rainures étant configurée pour s'insérer sur une dite paroi dentée de sorte que chaque dite tige s'insère dans un creux de la denture des parois dentées ;
- ledit rebord de ladite rampe comporte des parois longitudinales comportant chacune une base formant un renflement, chaque dite base étant reliée à un tronçon longitudinal d'une paroi de fond que comporte ledit fond de ladite rampe ;
- chaque patte de la traverse comporte une portion d'extrémité configurée pour s'insérer dans ledit renflement dans la position déployée de la traverse ;
- la portion centrale de la traverse comporte deux éléments centraux en regard l'un de l'autre et reliés à coulissement, chaque patte saillant d'un desdits éléments centraux ;
- la portion centrale de la traverse comporte en outre un ressort sollicitant lesdits éléments centraux à s'écarter l'un de l'autre, et donc à solliciter ladite traverse vers la position déployée ;
- dans ladite rampe de congélation ledit fond comporte une paroi de fond en forme de cadre rectangulaire entourant l'espace libre central avec deux tronçons transversaux et deux tronçons longitudinaux, avec lesdites parois dentées qui s'étendent transversalement à la paroi de fond en bordant intérieurement lesdits tronçons longitudinaux, ledit rebord s'étendant transversalement à la paroi de fond et comportant deux parois longitudinales bordant extérieurement lesdits tronçons longitudinaux de la paroi de fond et deux parois transversales bordant extérieurement lesdits tronçons transversaux de la paroi de fond, lesdites parois longitudinales comportant chacune à leur sommet une cornière ; ledit ensemble comporte en outre un dispositif de transfert de paillettes comportant deux patins latéraux et un collecteur de paillettes délimitant un logement débouchant sur toute sa longueur par une bouche, ledit collecteur étant disposé entre les deux patins latéraux, ladite rampe de congélation, ledit dispositif de transfert et ladite traverse étant configurés : pour que ledit dispositif de transfert admette une première position extrême où il est disposé avec chaque patin latéral qui prend appui sur une dite cornière tandis que ledit collecteur est en surplomb d'un dit tronçon transversal de ladite paroi de fond ; pour admettre une seconde position extrême où ledit dispositif de transfert est disposé avec chaque patin latéral qui prend appui sur une dite cornière tandis que ledit collecteur est en surplomb de l'autre dit tronçon transversal de ladite paroi de fond ; pour qu'en l'absence de ladite traverse à un dit emplacement, en faisant glisser le dispositif de transfert de la première position extrême à la seconde position extrême avec lesdits patins qui glissent sur lesdites cornières, ladite pluralité de paillettes initialement disposée sur ladite rampe est récupérée dans ledit collecteur dudit dispositif de transfert ; et pour qu'en présence de ladite traverse à un dit emplacement, en faisant glisser le dispositif de transfert à partir de la première position extrême avec lesdits patins qui glissent sur lesdites cornières, le dispositif de transfert ne peut aller au-delà d'une position où ladite portion centrale de ladite traverse est insérée dans ladite bouche, grâce à quoi seules les paillettes situées entre ledit tronçon transversal de la paroi de fond et ladite traverse sont récupérées dans le collecteur du dispositif de transfert ;
- chaque patte de ladite traverse comporte au moins un aileron configuré pour s'insérer dans le collecteur de sorte à retenir à l'intérieur du collecteur lesdites paillettes disposées dans le collecteur ; et/ou
- chaque aileron s'étend entre l'une des parois longitudinales et l'une des parois dentées de la rampe de congélation quand la traverse est à un dit emplacement.

### Brève description des dessins

L'exposé de l'invention sera maintenant poursuivi par la description détaillée d'exemples de réalisation, donnée ci-après à titre illustratif et non limitatif, en référence aux dessins annexés, sur lesquels :
[Fig. 1] la figure 1 est une vue en coupe longitudinale d'une paillette conventionnelle remplie et obturée ;
[Fig. 2] la figure 2 est une vue en perspective d'une rampe de congélation prévue pour recevoir une pluralité de paillettes telles que celle illustrée sur la figure 1 et pour être alors placée dans un congélateur ;
[Fig. 3] la figure 3 est une vue de face de cette rampe de congélation ;
[Fig. 4] la figure 4 est une vue semblable à la figure 3 mais montrant plusieurs rampes de congélation semblables empilées les unes sur les autres ;
[Fig. 5] la figure 5 est une vue en perspective d'un élément de support prévu pour faciliter la mise en place des paillettes sur la rampe de congélation montrée sur les figures 2 et 3 ;
[Fig. 6] la figure 6 est une vue en perspective de l'élément de support et de la rampe de congélation dans une position relative de mise en place des paillettes sur la platine de l'élément de support ;
[Fig. 7] la figure 7 est une vue en élévation-coupe de la rampe de congélation et de l'élément de support dans la même position que sur la figure 6 après que des paillettes ont été mises en place sur la platine de l'élément de support ;
[Fig. 8] la figure 8 est une vue semblable à la figure 7 mais avec la rampe de congélation et l'élément de support qui sont dans une position relative d'alignement longitudinal des paillettes mises en place sur la platine de l'élément de support ;
[Fig. 9] la figure 9 est une vue en perspective de l'élément de support, de la rampe de congélation et des paillettes dans la position de la figure 8 ;
[Fig. 10] la figure 10 est une vue semblable à la figure 9 mais avec les paillettes mises en place sur la rampe de congélation, le transfert des paillettes entre l'élément de support et la rampe de congélation ayant été effectué par soulèvement de la rampe de congélation à partir de la position montrée sur les figures 8 et 9 ;
[Fig. 11] la figure 11 est une vue en élévation-coupe d'une portion de la rampe de congélation avant que les paillettes aient été mises en place ;
[Fig. 12] la figure 12 est une vue semblable à la figure 11 mais avec les paillettes mises en place ;
[Fig. 13] la figure 13 est une vue en élévation d'un dispositif de transfert pour ramasser après congélation les paillettes disposées sur la rampe ;
[Fig. 14] la figure 14 est une vue en perspective du dispositif de transfert et de la rampe de congélation sur laquelle sont disposées les paillettes, le dispositif de transfert étant dans une première position extrême ;
[Fig. 15] la figure 15 est une vue en élévation semblable à la figure 13 mais avec le dispositif de transfert placé sur la rampe de congélation comme montré sur la figure 14 ;
[Fig. 16] la figure 16 est une vue en élévation-coupe du dispositif de transfert et de la rampe de congélation dans la même position que sur la figure 14 ;
[Fig. 17] la figure 17 est une vue semblable à la figure 16 mais avec le dispositif de transfert dans une position intermédiaire sur la rampe de congélation et une partie des paillettes qui a été récupérée par le dispositif de transfert ;
[Fig. 18] la figure 18 est une vue semblable aux figures 16 et 17 mais avec le dispositif de transfert dans une seconde position extrême et toutes les paillettes qui ont été récupérées par le dispositif de transfert ;
[Fig. 19] la figure 19 est une vue en perspective du dispositif de transfert et de la rampe de congélation dans la même position que sur la figure 18 ;
[Fig. 20] la figure 20 est une vue en perspective du dispositif de transfert rempli de paillettes et d'un gobelet, le dispositif de transfert étant dans une position de basculement vers l'intérieur du gobelet ;
[Fig. 21] la figure 21 est une vue semblable à la figure 20 mais avec le dispositif de transfert dans une position retournée au-dessus du gobelet versant les paillettes à l'intérieur du gobelet ;
[Fig. 22] la figure 22 est une vue en perspective d'une transverse pour séparer des paillettes de contenus différents ;
[Fig. 23] la figure 23 est une vue éclatée en perspective de la transverse de la figure 22 ;
[Fig. 24] la figure 24 est une vue en élévation-coupe de la traverse de la figure 22 dans une position déployée ;
[Fig. 25] la figure 25 est une vue semblable à la figure 24 mais dans une position rétractée ;
[Fig. 26] la figure 26 est une vue en perspective de la traverse et de la rampe de congélation sur laquelle sont disposées les paillettes, la traverse étant placée entre des paillettes contenant de la semence provenant d'animaux différents ;
[Fig. 27] la figure 27 est une vue semblable à la figure 17 mais avec la traverse qui coopère avec le dispositif de transfert ; et
[Fig. 28] la figure 28 est une vue semblable à la figure 27 pour une variante de la traverse.

### Description détaillée

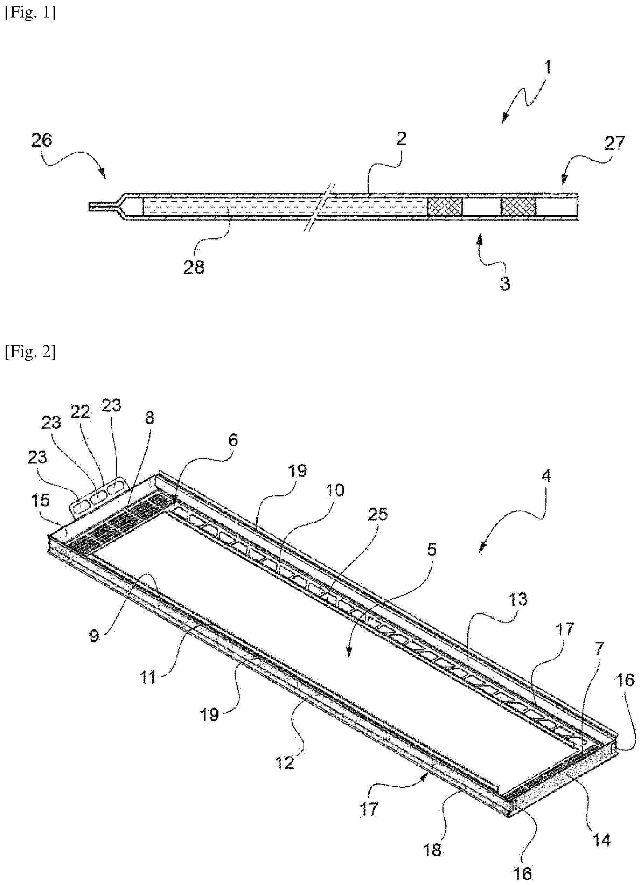

La figure 1 montre, à l'état rempli et obturé, une paillette 1 de conditionnement de semence animale formée par un tube mince 2 en matière plastique et par un bouchon 3 engagé dans le tube 2, la paillette 1 contenant une dose 28 de semence animale diluée, ici de la semence de taureau, disposée entre le bouchon 3 et un tronçon d'extrémité 26 obturé par écrasement et soudage.

Le tronçon d'extrémité 26 est le plus éloigné du bouchon 3. Le tronçon d'extrémité 27, qui est le plus proche du bouchon, n'est ici pas obturé (de ce côté, c'est le bouchon 3 qui retient la dose 28 de semence).

La paillette 1, et plus précisément le tube 2, a une longueur de l'ordre de 133 mm et un diamètre interne qui est de l'ordre de 1,6 mm avec une épaisseur de paroi de l'ordre de 0,175 mm de sorte que le diamètre de la paillette 1, et plus précisément le diamètre externe du tube 2, est de l'ordre de 1,95 mm.

En pratique, vu les tolérances de fabrication, le diamètre externe du tube 2 de la paillette 1 est compris entre 1,90 et 2 mm et sa longueur est comprise entre 132 et 134 mm.

La dose de semence 28 contenue dans la paillette 1 est une dose de semence fraiche qu'il est prévu de conserver par immersion de la paillette 1 dans un bain d'azote liquide.

Avant cette immersion, il convient de congeler la paillette 1 en la plaçant dans un congélateur où circule un flux de vapeur d'azote liquide.

En pratique, on dispose une pluralité de paillettes 1 sur un rack appelé rampe de congélation puis la rampe de congélation portant les paillettes est introduite dans le congélateur. En général, le congélateur est dimensionné pour recevoir plusieurs rampes de congélation superposées.

Les figures 2 à 4 montrent une rampe de congélation spécialement conçue pour coopérer avec des accessoires prévus pour faciliter la manipulation des paillettes.

Ici, la rampe de congélation 4 est faite à partir d'une tôle métallique découpée et pliée.

La rampe de congélation 4 a la forme générale d'un plateau présentant un rebord et un fond entourant un espace libre central 5.

Le fond comporte une paroi de fond 6 en forme de cadre rectangulaire entourant l'espace libre central 5. La paroi de fond 6 est ajourée de manière à permettre la circulation de la vapeur d'azote liquide dans le congélateur.

La paroi de fond 6 comporte deux tronçons transversaux 7 et 8 et deux tronçons longitudinaux 9 et 10. Les tronçons transversaux 7, 8 sont en regard l'un de l'autre et relient les tronçons longitudinaux 9, 10 en regard l'un de l'autre.

Dans le fond de la rampe de congélation 4, les tronçons longitudinaux 9, 10 sont bordés intérieurement chacun par une paroi dentée 11, 25 s'étendant transversalement à la paroi de fond 6.

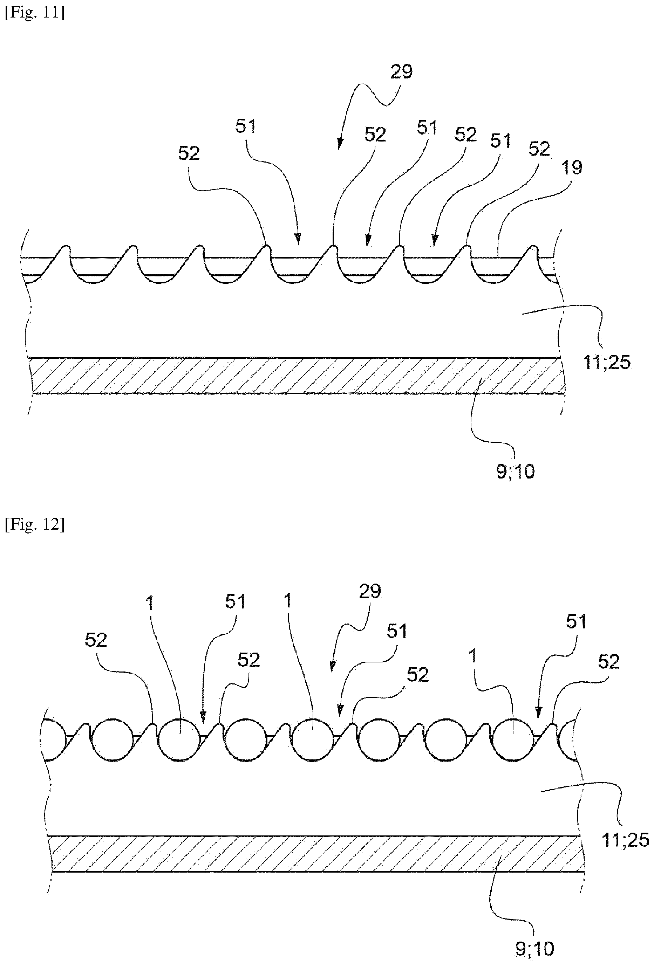

Le sommet de chacune des parois dentées 11, 25 présente une denture 29 comportant une succession de dents 52 et de creux 51, chaque creux 51 étant configuré pour loger un tronçon d'extrémité 26, 27 d'une paillette 1, comme illustré sur les figures 11 et 12.

Chaque creux 51 de la denture 29 de la paroi dentée 11 est en regard d'un creux 51 de la denture 29 de la paroi dentée 25 et chaque creux 51 est délimité par une surface ayant une courbure selon le diamètre des paillettes. Le pas de la denture 29 de la paroi dentée 11 est identique au pas de la denture 29 de la paroi dentée 25.

Ainsi, chaque creux 51 de la denture 29 de la paroi dentée 11 permet de loger un tronçon d'extrémité 26 et chaque creux 51 en regard de la paroi dentée 25 permet de loger un tronçon d'extrémité 27.

Le rebord de la rampe de congélation 4 comporte deux parois longitudinales 12, 13 disposées en regard l'une de l'autre, reliées par deux parois transversales 14 et 15 en regard l'une de l'autre. Les parois transversales 14, 15 s'étendent depuis les tronçons transversaux 7, 8 de la paroi de fond 6 et les parois longitudinales 12 et 13 s'étendent depuis les tronçons longitudinaux 9 et 10 de la paroi de fond 6.

Les parois transversales 14, 15 et les parois longitudinales 12, 13 s'étendent transversalement à la paroi de fond 6 de la rampe de congélation 4.

De plus, une portion de paroi 16 saille de part et d'autre de chacune des parois longitudinales 12, 13. Ces portions de parois 16 sont pliées vers les parois transversales 14, 15, puis soudées à ces parois, afin de maintenir en position les parois longitudinales 12, 13 contre les parois transversales 14, 15 permettant alors de rigidifier la rampe de congélation 4.

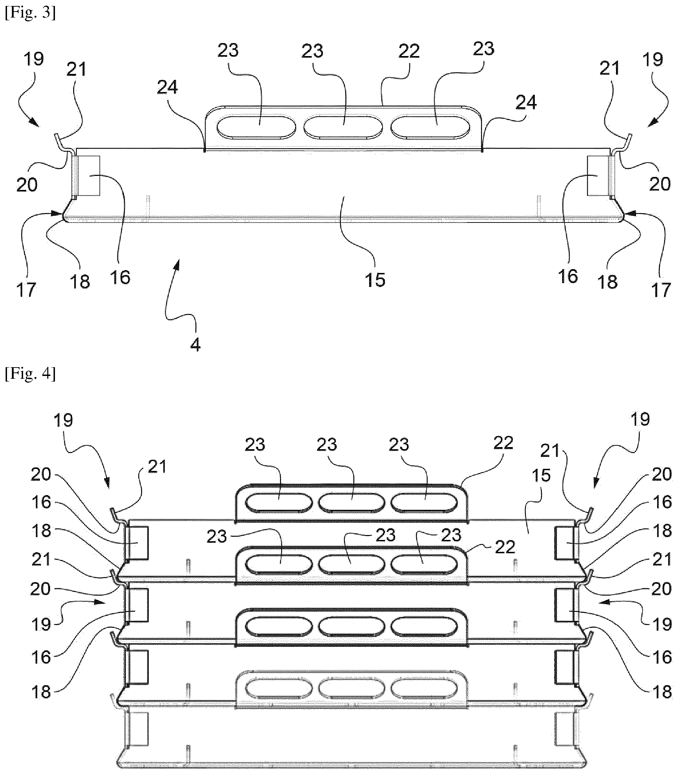

Comme on le voit bien sur la figure 3, la base 17 des parois longitudinales 13, 14, reliée aux tronçons longitudinaux 9, 10, forme un renflement 18.

Une cornière 19 saille de chaque paroi longitudinale 12, 13. Chaque cornière 19 comporte une aile 20 s'étendant transversalement aux parois longitudinales 12, 13 ainsi qu'une aile 21 inclinée s'étendant de l'aile 20 vers l'extérieur et vers le haut de la rampe de congélation 4.

La rampe de congélation 4 est empilable avec une autre rampe de congélation semblable, tel que cela est illustré à la figure 4. Chaque renflement 18 d'une rampe de congélation disposée au-dessus d'une autre rampe de congélation est alors logé dans la cornière 19 correspondante de l'autre rampe de congélation disposée en-dessous.

Plus précisément, chaque renflement 18 de la rampe de congélation prend appui sur l'aile 20 de la rampe de congélation du dessous et entre en butée contre l'aile 21.

Lors de l'empilement de plusieurs rampes de congélation 4, les cornières 19 d'une rampe permettent le maintien latéral de la rampe disposée au-dessus.

Au surplus, la rampe de congélation 4 est pourvue de deux pattes de préhension 22 émergeants chacune d'une paroi transversale 14, 15, vers l'extérieur et vers le haut de la rampe de congélation 4. Les pattes de préhension 22 sont chacune pourvues de trous 23 permettant à l'utilisateur de manipuler la rampe de congélation 4 en limitant les risques de glissement des doigts vis-à-vis des pattes 22.

Chaque patte de préhension 22 est disposée à équidistance des parois longitudinales 12, 13.

Lors de l'empilement d'une rampe de congélation 4 sur une autre rampe de congélation similaire, chaque patte de préhension 22 de la rampe du dessous maintient la rampe du dessus suivant la direction longitudinale.

En outre, des fentes 24 sont ménagées dans les parois transversales 14, 15 de part et d'autre de chacune des pattes de préhension 22.

Comme indiqué ci-dessus, la rampe de congélation 4 a été spécialement conçue pour coopérer avec des accessoires prévus pour faciliter la manipulation des paillettes.

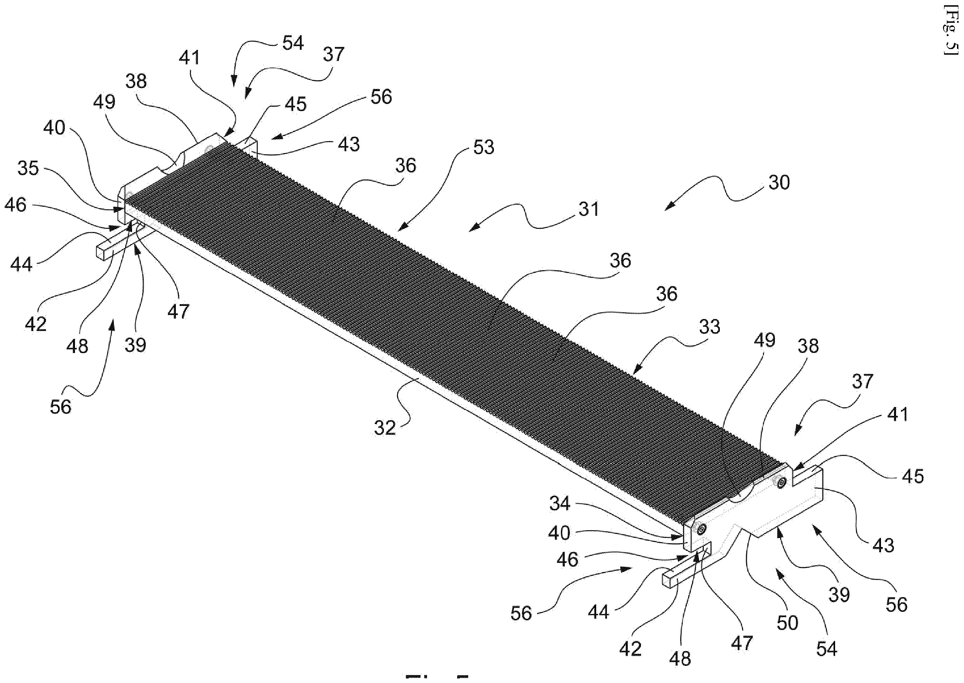

On va maintenant décrire un accessoire pour faciliter la mise en place de la pluralité de paillettes 1 sur la rampe de congélation 4, à savoir un élément de support 30 montré sur la figure 5.

L'élément de support 30 est configuré pour être posé sur une surface de réception horizontale telle qu'une table par exemple.

L'élément de support 30 présente une platine 31 et deux joues 37.

La platine 31 est à contour rectangulaire. Elle est délimitée par deux faces longitudinales 32, 33, deux faces transversales 34, 35, une face supérieure et une face inférieure.

La face supérieure de la platine 31 forme une surface cannelée 53 présentant une pluralité de gorges 36 semblables ménagées côte à côte selon un pas prédéterminé.

Chaque gorge 36 est configurée pour recevoir une paillette 1 du fait qu'elle est délimitée par une surface ayant une courbure selon le diamètre d'une paillette 1.

Chaque gorge 36 est orientée suivant la direction de la largeur de la platine 31, c'est-à-dire suivant la direction transversale.

Les gorges 36 sont disposées sur toute la largeur de la face supérieure de la platine 31, c'est-à-dire de la face longitudinale 32 à la face longitudinale 33.

Dans l'exemple illustré, la platine 31 comporte cent soixante-quinze gorges 6 et peut donc accueillir cent soixante-quinze paillettes 1.

D'une façon générale, il est avantageux que la platine 31 comporte entre soixante-dix et deux cent cinq gorges semblables configurées pour loger le même nombre de paillettes 1.

La platine 31 a une largeur inférieure à la longueur des paillettes 1, à savoir 133 mm, de sorte que quand une paillette 1 est placée centrée ou à peu près dans une gorge 36, ses tronçons d'extrémités 26 et 27 dépassent de part et d'autre de la platine 31.

D'une façon générale, il est avantageux que la platine 31 ait une largeur comprise entre 80 et 90 mm.

Les joues 37 de l'élément de support 30 sont identiques.

Elles sont liées rigidement à la platine 31, ici à chaque extrémité transversale. La liaison rigide est effectuée ici par vissage.

Chaque joue 37 comporte une partie centrale 54 et deux parties saillantes 56.

La partie centrale 54 est de forme générale rectangulaire et est délimitée par une surface supérieure 38, une surface inférieure 39 et deux surfaces latérales 40 et 41.

La largeur de cette partie centrale 54, c'est-à-dire la distance entre les deux surfaces latérales 40, 41 correspond à la largeur de la platine 31.

La surface inférieure 39 de chacune des joues 37 prend appui sur la surface de réception telle qu'une table. La fixation de chacune des joues 37 sur la platine 31 est faite au voisinage de la surface supérieure 38 de chaque joue 37.

Ainsi, la platine 31 s'étend au-dessus et parallèlement à la surface de réception horizontale sur laquelle repose les joues 37 de l'élément de support 30.

La platine 31 et la partie centrale 54 de chacune des joues 37 sont configurées pour se loger dans l'espace libre central 5 de la rampe de congélation 4, entre les parois dentées 11 et 25. Les parties saillantes 56 s'étendent de part et d'autre de la partie centrale 54 des joues 37. Plus précisément, chaque partie saillante 56 émerge d'une des surfaces latérales 40, 41.

La première partie saillante 56 comporte une patte 42 en débord de la surface latérale 40 à la base de la joue 37, avec ici la face inférieure de la patte 42 qui fait partie de la surface inférieure 39 de la joue 37.

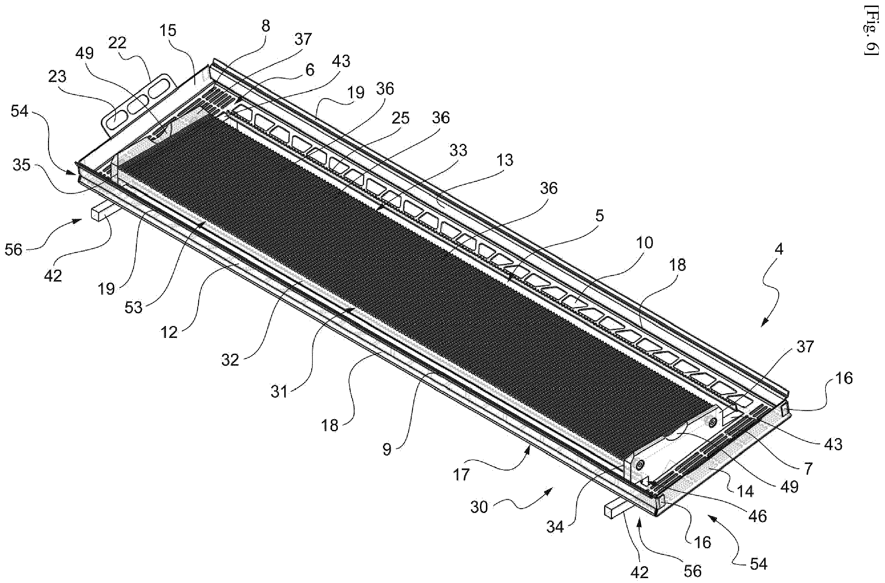

La face supérieure de la patte 42 forme une face d'appui 44 prévue pour recevoir l'une des zones de la rampe de congélation 4 située à la jonction de la paroi de fond 6 et du rebord, en l'occurrence le renflement 18 en regard de la paroi dentée 11, comme on le voit sur les figures 6 à 8.

La seconde partie saillante 56 comporte une patte 43 en débord de la surface latérale 41, à la base de la joue 37 avec ici la face inférieure de la patte 43 qui fait partie de la surface inférieure 39 de la joue 37.

La face supérieure de la patte 43 forme une face d'appui 45 prévue pour recevoir l'une des zones de la rampe de congélation 4 située à la jonction de la paroi de fond 6 et de l'une des parois dentées 11, 25, ici la paroi dentée 25, comme on le voit sur les figures 6 à 8.

Suivant la direction de la hauteur, la face d'appui 44 de chaque patte 42 est plus éloignée de la platine 31 que la face d'appui 45 de chaque patte 43. Ainsi, lorsqu'elle est mise en place sur l'élément de support 30, la rampe de congélation 4 est inclinée.

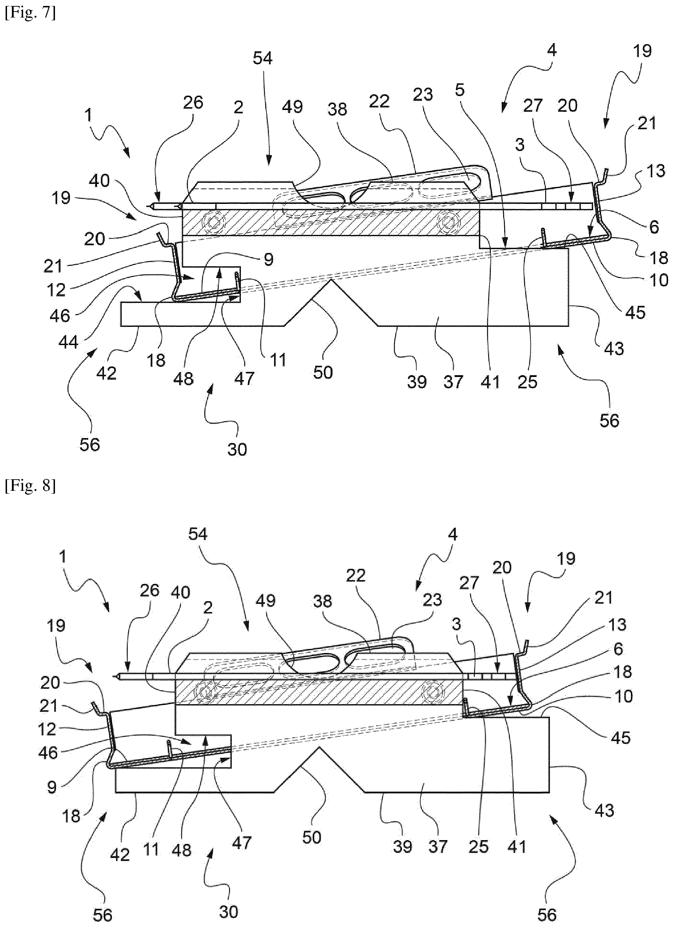

Cette inclinaison est telle (voir les figures 7 et 8) que la paroi longitudinale 13 est au même niveau que la surface supérieure de la platine 31 alors que la paroi longitudinale 12 est en-dessous de la surface supérieure de la platine 31.

Une encoche 46 est ménagée dans chaque joue 37 en retrait de la surface latérale 40.

L'encoche 46 est délimitée par une face d'appui située dans le prolongement de la face d'appui 44 de la patte 42, une face de fond 47 et une face supérieure 48. Pour chaque joue 37, la face supérieure 48 est en regard de la face d'appui 44 et la face de fond est transversale à la face d'appui 44 et à la face supérieure 48.

Chaque encoche 46 est configurée pour loger un des tronçons longitudinaux 9 ou 10 (le tronçon 9 sur les figures 5 à 9) et la paroi dentée 11 ou 25 (la paroi dentée 11 sur les figures 5 à 9).

La profondeur de l'encoche 46 est prédéterminée et correspond ici à la distance entre la paroi dentée 11 et la paroi longitudinale 12 ainsi qu'à la distance entre la paroi dentée 25 et la paroi longitudinale 13 (ici les distances entre les parois dentées 11, 25 et respectivement les parois longitudinales 12, 13 sont égales).

Dans la position relative de mise en place des paillettes 1 sur la platine 31 montrée sur les figure 6 et 7, la rampe de congélation 4 est reçue sur l'élément de support 30 avec la paroi dentée 11 en butée contre la face de fond 47 de l'encoche 46.

Dans cette position, selon la direction transversale (direction de la largeur) de la platine 31, la paroi longitudinale 13 est à distance de la platine 31 tandis que la paroi longitudinale 12 en est proche mais comme elle est située en-dessous de la surface supérieure de la platine 31, elle ne gêne pas l'accès à cette surface supérieure, qui est plus généralement facile d'accès puisque la paroi latérale 13 est à distance de la platine 31.

L'utilisateur peut alors aisément étaler la pluralité de paillettes 1 sur la surface supérieure cannelée 53 de la platine 31, en veillant à centrer grossièrement les paillettes par rapport à la platine 31.

On observera que dans la position relative de mise en place des paillettes 1 sur la platine 31 montrée sur les figure 6 et 7, la distance entre la surface latérale 41 et la paroi dentée 25 est plus grande que la profondeur de l'encoche 46.

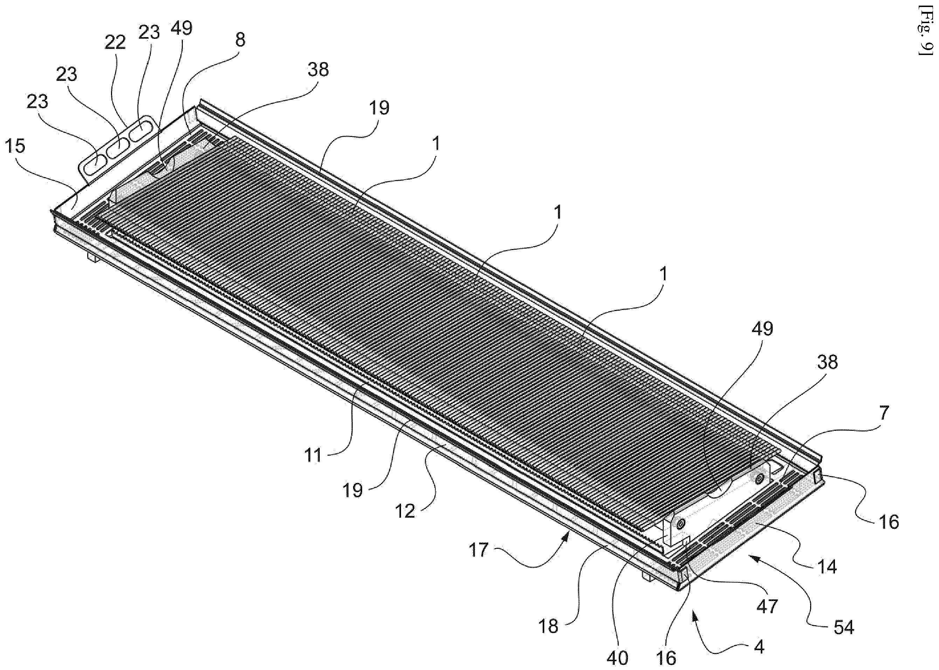

Par conséquent si l'on fait glisser la rampe de congélation 4 sur les faces d'appui 44 et 45 dans le sens qui fait sortir la paroi dentée 11 de l'encoche 46 (vers la gauche sur la figure 7), la paroi dentée 11 est hors de l'encoche 46 lorsque la paroi dentée 25 vient contre la surface latérale 41, ainsi que montré sur les figures 8 et 9.

On est alors dans une position d'alignement longitudinal des paillettes, par venue en contact de celles-ci contre la paroi longitudinale 13.

Pour une partie des paillettes, cet alignement est effectué lors du mouvement de la rampe de congélation 4 depuis la position relative de mise en place des paillettes, puisque lors de ce mouvement la paroi longitudinale 13 est venue au contact des paillettes qui dépassaient trop de son côté puis est restée en contact avec elles en les poussant. Pour les autres paillettes (celles qui dépassent trop du côté opposé à la paroi longitudinale 13), l'utilisateur les pousse à la main pour qu'elles viennent aussi contre la paroi 13. Toutes les paillettes sont alors alignées, puisqu'elles ont chacune une extrémité le long de la paroi 13, ainsi qu'on le voit bien sur la figure 9.

La paroi dentée 11, qui est hors de l'encoche 46, est en regard des tronçons d'extrémité 26 des paillettes 1 tandis que la paroi dentée 25 est en regard de leurs tronçons d'extrémité 27.

Plus précisément, la rampe de congélation 4 et l'élément de support 30 sont configurés, en particulier du fait que le pas de la denture 29 des parois 11 et 25 est le même que le pas de la surface cannelée 53 de l'élément de support 30, pour que chaque creux 51 de la denture 29 de la paroi dentée 11 soit en regard du tronçon d'extrémité 26 d'une paillette 1 et que chaque creux 51 de la denture 29 de la paroi dentée 25 soit en regard du tronçon d'extrémité 27 d'une paillette 1.

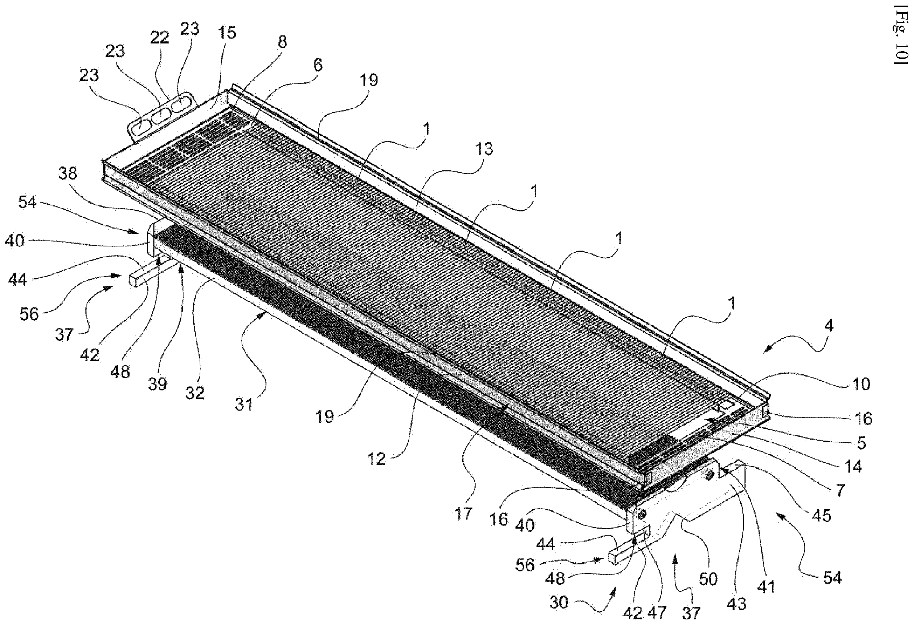

Ainsi, il suffit à l'utilisateur de soulever la rampe de congélation 4 pour que chaque tronçon d'extrémité 26, 27 des paillettes se loge dans un creux 51 de denture 29 des parois dentées 11, 25, les paillettes 1 étant ainsi mises en place sur la rampe de congélation 4, ainsi qu'on le voit sur la figure 10.

La figure 10 montre une portion de paroi dentée 11, 25 avant le soulèvement de la rampe 4, lorsque les paillettes 1 sont disposées sur la platine 31 et la figure 11 montre cette même portion de paroi dentée 11, 25 après le soulèvement de la rampe 4, lorsque les paillettes 1 sont mises en place dans la denture 29.

On notera que pour simplifier les dessins, seule l'une des pattes de préhension 22 de la rampe 4 est illustrée sur les figures 9 et 10.

On observera que chaque joue 37 comporte ici une alvéole 49 ménagée dans la surface supérieure 38 jusqu'à la platine 31. Chacune de ces alvéoles 49 présente une longueur et une largeur permettant d'y insérer le doigt d'une main d'adulte.

Chaque alvéole 49, disposée à mi-distance des faces longitudinales 32, 33 de la platine 31, facilite l'étalage de la pluralité de paillettes 1 sur la surface cannelée 53 de la platine 31 puisqu'elle permet à l'utilisateur d'y disposer son doigt lorsqu'il dépose en vrac la pluralité de paillettes dans la pluralité de gorges 36 de la platine 31 au voisinage de chaque joue 37.

Chacune des joues 37 comporte également une cavité 50 ménagée dans la surface inférieure 39 à mi-distance de chacune des faces longitudinales 32, 33, de la platine 31. Chaque cavité 50 présente une longueur et une largeur permettant d'y insérer le doigt d'une main d'adulte.

L'utilisateur peut transporter l'élément de support par pincement des joues 37, en disposant un doigt dans chaque alvéole 49 et un autre doigt dans chaque cavité 50.

On va maintenant récapituler les actions effectuées par l'utilisateur pour mettre en place les paillettes 1 sur la rampe de congélation 4.

Tout d'abord, la rampe de congélation 4 est disposée sur l'élément de support 30.

Plus précisément, la platine 31 et la partie centrale de chacune des joues 37 sont insérées dans l'espace libre central 5 de la rampe de congélation 4, avec l'élément de support 30 et la rampe de congélation 4 disposés dans la position de mise en place des paillettes 1 sur la platine 31 (figures 6 et 7).

L'utilisateur place ensuite sur la surface cannelée 53 de la platine 31 la pluralité de paillettes en vrac. En les étalant sur la surface, chaque paillette 1 s'insère dans une gorge 36 de la platine 31, l'utilisateur veillant à centrer grossièrement les paillettes 1 vis-à-vis de la platine 31.

Une fois les paillettes 1 placées dans les gorges 36, l'utilisateur translate la rampe 4 de sorte à ce qu'elle soit en position d'alignement longitudinal des paillettes (figures 8 et 9).

L'utilisateur saisit alors les pattes de préhension 22 pour soulever la rampe de congélation 4. Les paillettes sont alors mises en place sur la rampe de congélation 4 (figure 10).

On notera que sur les figures 6 à 10 c'est la paroi dentée 11 qui est du côté de l'encoche 46 mais que cela aurait pu être la paroi dentée 25, la partie de la rampe de congélation 4 située d'un côté d'un plan médian longitudinal orienté verticalement étant l'image miroir de la partie située de l'autre côté.

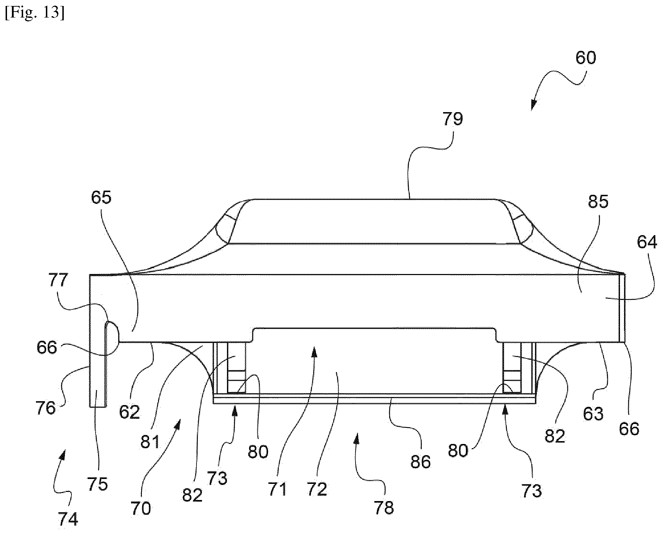

On va maintenant décrire un accessoire pour faciliter le transfert des paillettes 1 de la rampe de congélation 4 vers un gobelet 55, à savoir un dispositif de transfert 60 montré sur la figure 13.

Le dispositif de transfert 60 comporte un corps 61.

Le corps 61 a la forme générale d'une gouttière inversée. Il est délimité par une face interne 84 et une face externe 85 et comporte deux tranches 62, 63, une première portion d'extrémité 64 et une seconde portion d'extrémité 65.

Les tranches 62, 63 s'étendent longitudinalement de la première portion d'extrémité 64 à la seconde portion d'extrémité 65.

Chaque portion d'extrémité 64, 65 comporte deux bases 66 en forme de coin 66.

Les coins 66 de chaque portion d'extrémité 64, 65 forment un patin latéral 67.

Les patins latéraux 67 sont configurés pour prendre appui sur la cornière 19. Cette cornière 19 est formée par l'aile 20 et l'aile 21 inclinée.

La longueur du corps 61 du dispositif de transfert 60 correspond à la distance entre les cornières 19 de chacune des parois longitudinales 12, 13 de la rampe de congélation 4. La largeur du corps 61, c'est-à-dire l'espacement entre chacune des tranches 62, 63 correspond à la largeur des tronçons transversaux 7, 8 de la rampe 4, à savoir la distance entre la paroi transversale 14 (respectivement 15) et l'une des extrémités des parois dentées 11 et 25. Le corps 61 est configuré pour recevoir toutes les paillettes disposées sur la rampe 4, à savoir entre soixante-dix et deux cent cinq paillettes (cent soixante-quinze paillettes dans l'exemple illustré).

Le dispositif de transfert 60 comporte en outre un collecteur 70.

Le collecteur 70 est disposé entre les deux patins latéraux 67 et il comporte une pelle 72.

La pelle 72 saille d'une base du corps 61 de manière incurvée vers la tranche 63. La pelle 72 comporte une surface interne 81 disposée en regard de la face interne 84 du corps 61.

La pelle 72 est configurée pour se loger dans l'espace libre central 5 de la rampe de congélation 4.

Le collecteur 70 délimite un logement 71. Plus particulièrement, le logement 71 est de section ronde et il est délimité par la face interne 84 du corps 61 et par la surface interne 81 de la pelle 72.

Le logement 71 est débouchant sur toute sa longueur par une bouche 78.

La bouche 78 est configurée pour permettre l'insertion des paillettes 1 dans le logement 71. La longueur de la bouche 78 est donc supérieure à la longueur des paillettes 1, à savoir plus de 133 mm.

Plus particulièrement, la bouche 78 est située entre une extrémité distale 86 de la pelle 72 et la tranche 63 du corps 61.

Le dispositif de transfert 60 des paillettes 1 comporte en outre des organes anti-retour 73. Ici, deux organes anti-retour 73 s'étendent de manière incurvée dans la bouche 78 de la tranche 63 vers la surface interne 81.

Les organes anti-retour 73 sont configurés pour laisser les paillettes 1 entrer dans le logement 71 au travers de la bouche 78 et pour empêcher les paillettes 1 de sortir du logement 71 au travers de la bouche 78.

Les organes anti-retour 73 sont des lamelles dont la portion d'extrémité libre 80 peut prendre appui sur la surface interne 81 de la pelle 72.

Ces lamelles présentent chacune une surface externe 82 et une surface interne 83. La surface externe 82 est configurée pour être en contact avec les paillettes disposées sur les parois dentées 11, 25 de la rampe 4, alors que la surface interne 83 est configurée pour être en contact avec les paillettes ramassées, disposées dans le collecteur 70.

Les lamelles formant les organes anti-retour 73 sont dans une matière flexible permettant le fléchissement de ces lamelles au contact des paillettes 1 disposées sur la rampe 4. Ici, pour une épaisseur de l'ordre de 0,4 mm, les lamelles présentent une dureté de l'ordre de 95 shore A.

Lorsque les paillettes 1 entrent en contact avec leur surface externe 82, les organes anti-retour 73 fléchissent, de sorte que leur portion d'extrémité libre 80 se soulève de la pelle 72, créant alors un espace entre la pelle 72 et les organes anti-retour 73 permettant le passage des paillettes 1 dans le logement 71.

Après le passage d'une paillette 1, la lamelle revient au contact de la surface 81, empêchant la sortie des paillettes du logement 71.

Le dispositif de transfert 60 est pourvu d'un flasque 74.

Le flasque 74 a une forme générale ronde et s'étend de la portion d'extrémité 65, transversalement au corps 61.

Le flasque 74 est formé d'un fond 76 et d'une bordure 75 longeant la périphérie du fond 76. Le flasque 74 est coaxial au logement 71.

Le flasque 74 ferme le logement 71 à une extrémité, ici l'extrémité au voisinage de la portion d'extrémité 65, le logement 71 étant ouvert à l'autre extrémité.

Une encoche 77 est ménagée dans le corps 61, entre la bordure 75 du flasque 74 et la portion d'extrémité 65. L'encoche 77 est configurée pour logée l'aile inclinée 21 de la cornière 19. Ainsi, lorsque le dispositif de transfert 60 est disposé sur la rampe de congélation 4, l'encoche 77 loge l'aile inclinée 21 et le flasque 74 est disposé extérieurement à la première paroi longitudinale 12.

Le dispositif de transfert 60 de paillettes 1 est pourvu d'une poignée 79 saillant du corps 61. La poignée 79 permet à l'utilisateur de manipuler le dispositif de transfert 60. Elle est disposée à équidistance des portions d'extrémité 64, 65 et des tranches 62, 63 et s'étend vers le haut et vers l'extérieur de la rampe de congélation 4, lorsque le dispositif de transfert 60 est mis en position sur la rampe 4.

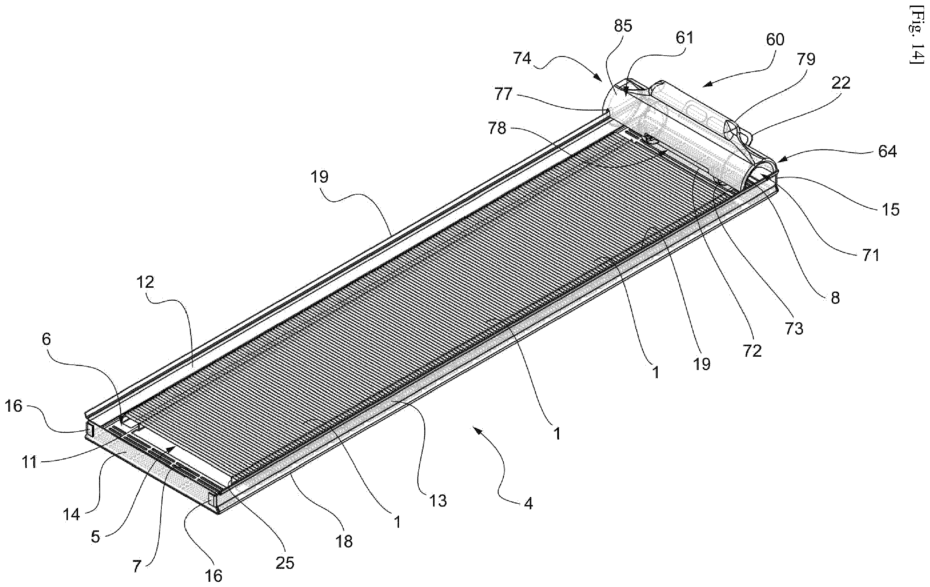

La rampe 4 et le dispositif de transfert 60 sont configurés pour admettre une première position extrême du dispositif de transfert 60 des paillettes 1 sur la rampe de congélation 4 montrée sur les figures 14 à 16.

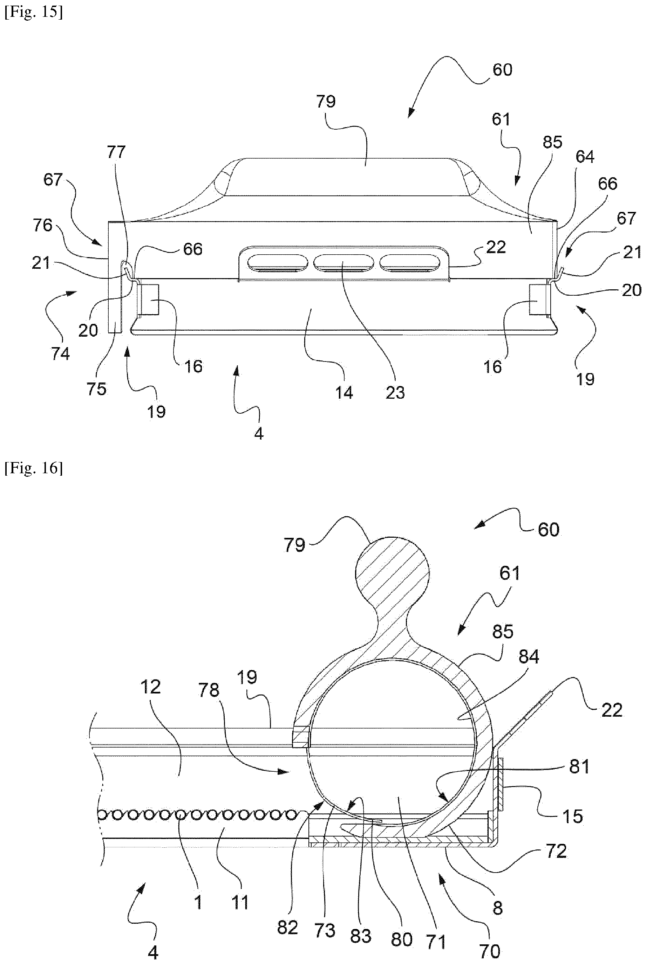

Dans la première position extrême, le dispositif de transfert 60 est reçu par la rampe de congélation 4 avec chaque patin latéral 67 qui prend appui sur une cornière 19 de la rampe 4 (figure 15) et la surface formant la limite inférieure de la bouche 78 est à un niveau situé entre les tronçons transversaux 7, 8 et le fond du creux 51 des parois dentées 11, 25 (figure 16).

Dans cette position, le collecteur 70 est en surplomb d'un des tronçons transversaux 7, 8, ici du second tronçon transversal 8. Le corps 61 prend appui contre la paroi transversale 14, 15 correspondant au tronçon transversal, ici la paroi 15, de telle sorte que la bouche 78 soit tournée vers les parois dentées 11, 25 et donc vers les paillettes 1.

En faisant glisser le dispositif de transfert 60 sur la rampe de congélation 4, les patins 67 glissant dans les cornières 19, les organes anti-retour 73 disposés entre les parois dentées 11, 25 vont entrer en contact avec les paillettes 1 mises en place dans les creux 51 des parois dentées 11, 25.

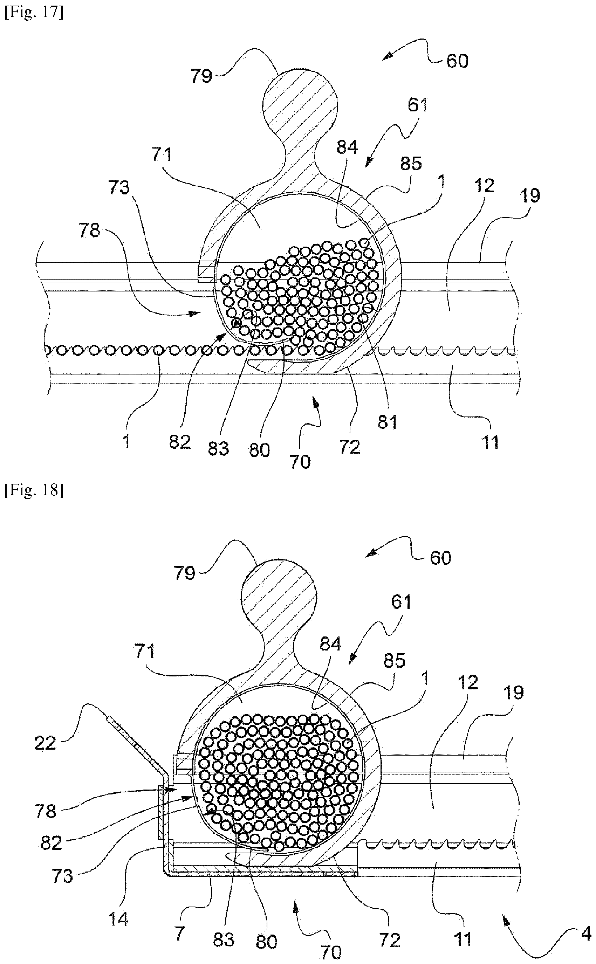

Tel qu'illustré sur la figure 17, au contact des paillettes 1, les organes anti-retour 73 fléchissent vers l'intérieur du logement 71, laissant un espace entre la pelle 72 et la portion d'extrémité libre 80 des organes anti-retour 73. Les paillettes 1 s'insèrent alors dans cet espace et entrent en contact avec la pelle 72. Les paillettes 1 encore disposées dans l'espace poussent les paillettes 1 déjà dans le logement 71 et la forme incurvée de la pelle 72 permet leur guidage vers le centre du logement 71. Cette forme incurvée permet donc une bonne circulation des paillettes 1 dans le logement 71 et une insertion efficace des paillettes 1. Une fois dans le logement 71, les paillettes 1 ne peuvent en ressortir car la bouche 78 à travers laquelle elles sont passées pour y entrer est obturée par les organes anti-retour 73. Cette obturation est rendue possible par la forme incurvée vers le logement 71 des organes anti-retour 73 et par leur portion d'extrémité libre 80 prenant appui sur la surface interne 81 de la pelle 72 lorsque ces organes sont sollicités vers l'extérieur.

En fin de course, toutes les paillettes 1 disposées sur la rampe 4 ont été transférées dans le logement 71, la rampe 4 et le dispositif de transfert 60 étant dans une seconde position extrême.

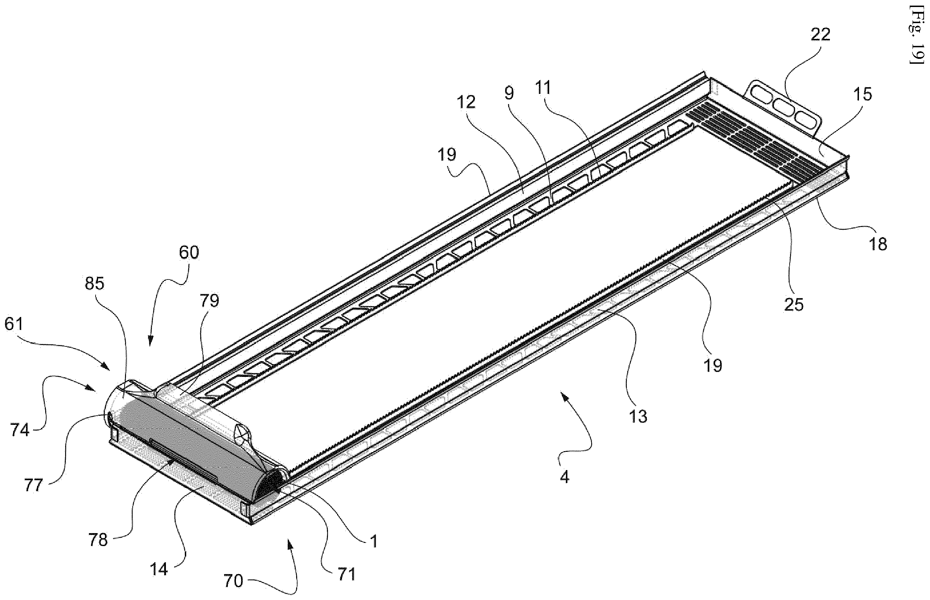

La seconde position extrême est illustrée sur les figures 18 et 19.

Dans cette position, les patins 67 prennent encore appui sur les cornières 19, tandis que le collecteur 70 est en surplomb du tronçon transversal opposé à celui de la première position extrême, ici le tronçon 7. Le corps 61 prend appui contre une paroi transversale 14, 15, ici la paroi 14, de sorte que la bouche 78 est tournée vers cette paroi 14.

Ainsi, il suffit à l'utilisateur de soulever par la poignée 79 le dispositif de transfert 60 pour l'ôter de la rampe 4.

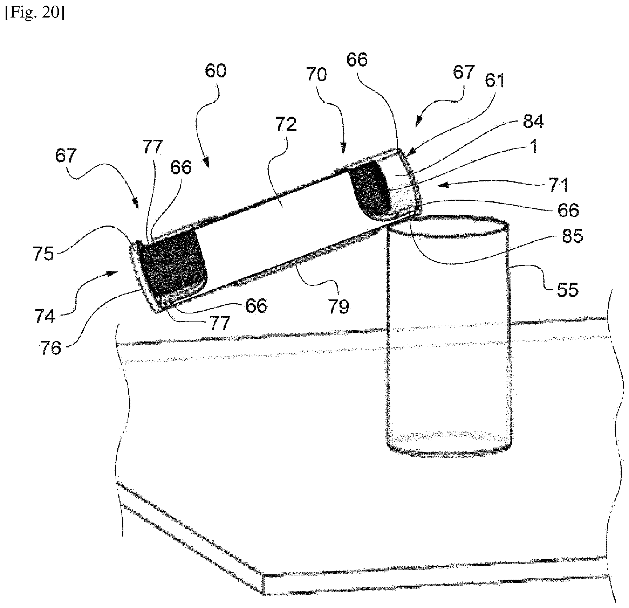

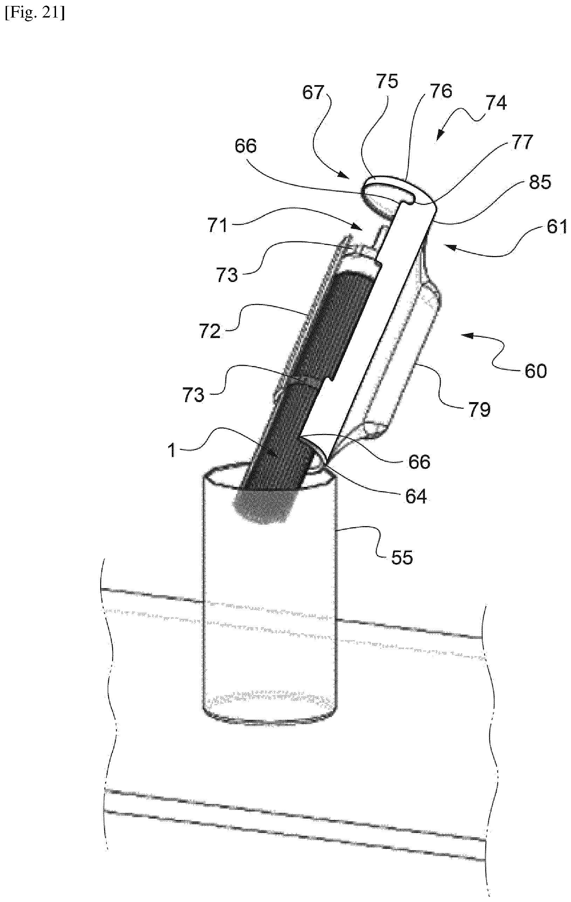

Le dispositif de transfert 60 des paillettes 1 est prévu pour coopérer alors avec le gobelet 55 (figures 20 et 21).

Le gobelet 55 est disposé sur un support horizontal et il présente une section dans laquelle se loge la section du logement 71 du dispositif de transfert 60.

Le dispositif de transfert 60, après avoir été soulevé de la rampe de congélation 4, est approché du gobelet 55, par exemple comme montré sur la figure 20.

On voit que grâce au flasque 74, il n'est pas nécessaire de maintenir le dispositif de transfert 60 dans une position horizontale pour éviter que les paillettes 1 ne s'en échappent, pourvu que le flasque 74 soit dans la position la plus basse, les paillettes 1 ayant une de leurs extrémités qui prend appui contre le fond 76 du flasque 74. Le corps 61, la pelle 72 et les organes anti-retour 73 permettent alors le maintien des paillettes 1 au sein du logement 71.

Le dispositif de transfert 60 est par la suite renversé au-dessus du gobelet 55 avec le côté opposé au fond 74 en bas. Les paillettes 1 glissent alors du logement 71 et tombent à l'intérieur du gobelet 55 (figure 21).

On va maintenant récapituler les actions effectuées par l'utilisateur pour transférer les paillettes de la rampe de congélation 4 au gobelet 55.

Tout d'abord, le dispositif de transfert 60 est disposé sur la rampe de congélation 4 où sont disposées les paillettes 1, dans la première position extrême.

Plus précisément, les patins latéraux 67 sont disposés contre les cornières 19 et le collecteur 70 s'insère entre les parois longitudinales 12, 13 de la rampe 4, en surplomb d'un tronçon transversal 7, 8, la bouche 78 disposées vers les paillettes 1.

L'utilisateur translate ensuite le dispositif de transfert 60 sur la rampe 4 par glissement le long des cornières 19, en saisissant la poignée 79. Les paillettes 1 s'insèrent alors dans le collecteur 70 du dispositif de transfert 60.

En fin de course, lorsque le corps 61 entre en butée contre une paroi transversale 14, 15, la bouche 78 vers cette paroi transversale 14, 15, toutes les paillettes de la rampe 4 ont été transférées dans le dispositif de transfert 60. L'utilisateur soulève par la poignée le dispositif de transfert 60 et le bascule d'un quart de tour de sorte que le flasque de fond 74 soutiennent les paillettes 1.

L'utilisateur retourne le dispositif de transfert 60 au-dessus du gobelet 55 pour transférer les paillettes dans le gobelet 55. Une fois les paillettes dans le gobelet 55, elles peuvent être placées dans un bain d'azote liquide.

Dans l'exemple illustré le dispositif de transfert 60 a coulissé du premier tronçon transversal 8 vers le second tronçon transversal 7 mais l'on peut naturellement procéder en sens inverse, c'est-à-dire du premier tronçon transversal 7 vers le second tronçon transversal 8.

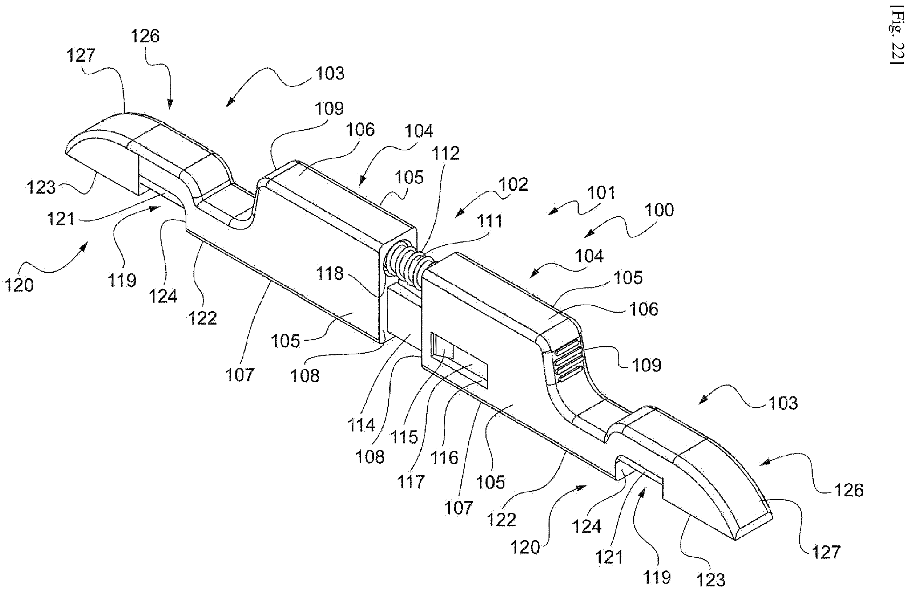

On va maintenant décrire un accessoire pour faciliter la séparation sur la rampe de congélation 4 de paillettes 1 dont la semence provient d'animaux différents, à savoir une traverse 100 montrée sur les figures 22 à 28.

La traverse 100 est configurée pour résister aux basses températures.

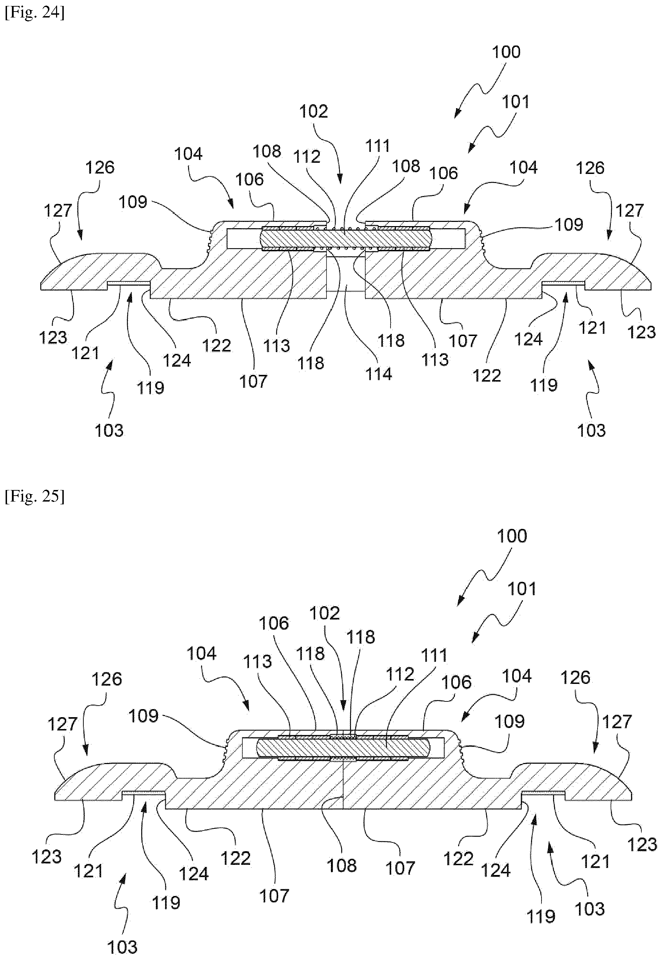

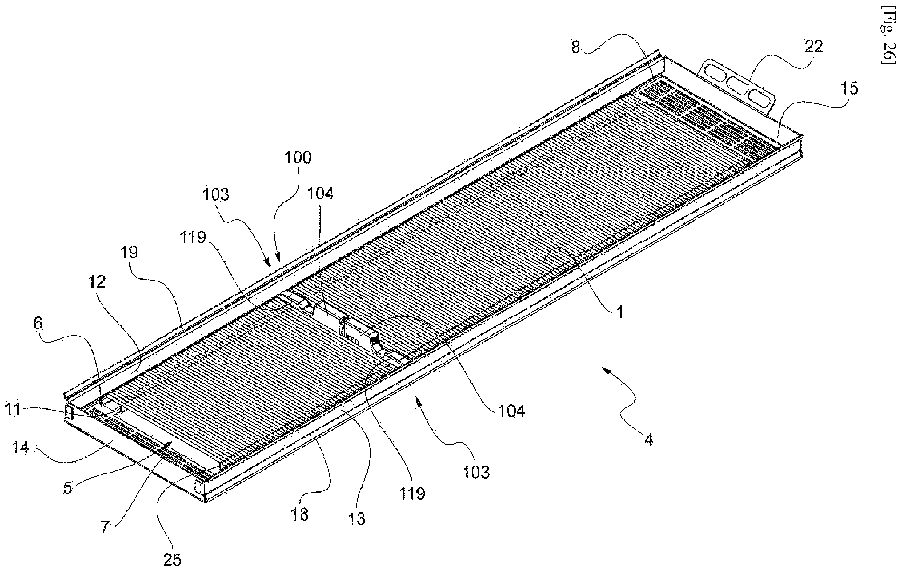

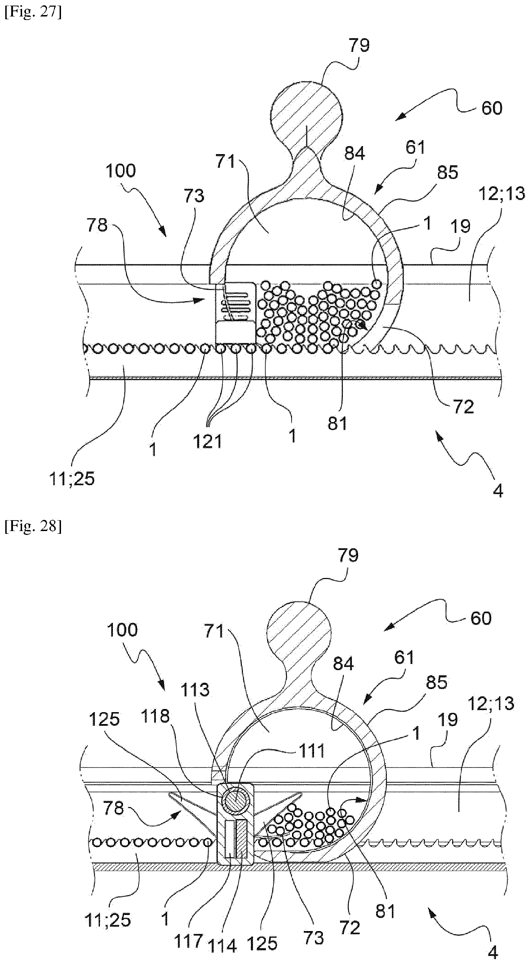

La traverse 100 comporte des parties mobiles les unes par rapport aux autres (voir les figures 24 et 25) configurées pour admettre une position où la traverse 100 est assujettie de façon amovible à la rampe de congélation 4 à un emplacement prévu pour recevoir au moins une paillette 1, ici trois paillettes (voir les figures 26 et 27).

La traverse 100 comporte une portion centrale 102 et de deux pattes 103.

La portion centrale 102 est de forme générale parallélépipédique et comporte deux éléments centraux 104. Les éléments centraux 104 sont de forme générale parallélépipédique et sont disposés en regard l'un de l'autre. Chaque élément central 104 comporte deux faces longitudinales 105, une face de dessus 106, une face de dessous 107, une face d'appui 108 et une face de prise 109.

La face de dessus 106 et la face de dessous 107 relient les faces longitudinales 105 entre elles, ainsi que la face d'appui 108 et la face de prise 109.

Les faces d'appui 108 des éléments centraux 104 sont en regard l'une de l'autre. Dans chacune d'elles débouche un alésage 118. Les alésages 118 sont coaxiaux. Dans chaque face d'appui 108 débouche en outre une cavité 117.

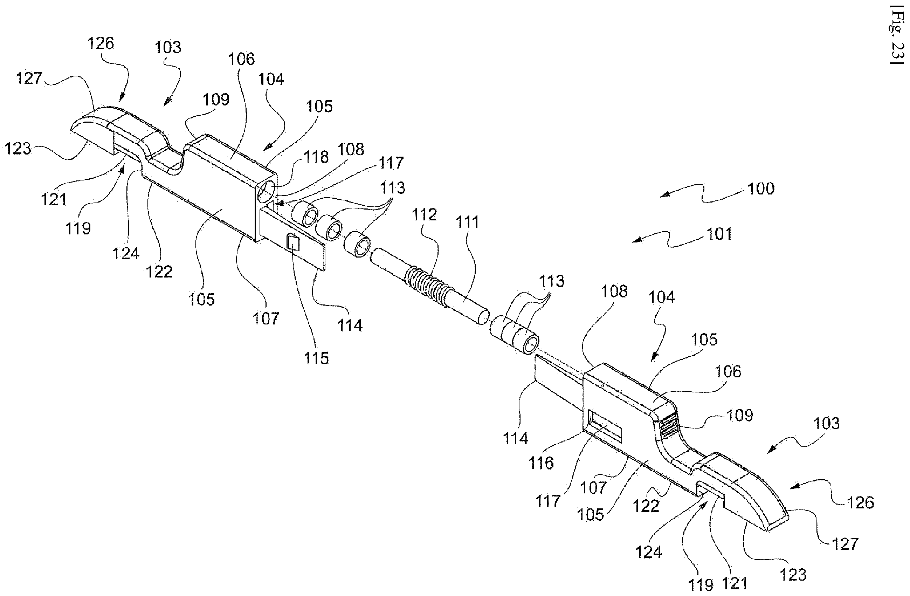

Les deux éléments centraux 104 sont reliés à coulissement. Ici, le montage à coulissement est mis en oeuvre par une tige 111, un ressort 112, des paliers lisses 113 et des doigts de fixation 114 (figure 23).

Ici, la traverse 100 comporte six paliers lisses 113, trois paliers lisses étant montés à force dans chaque alésage 118.

La tige 111 comporte deux extrémités longitudinales chacune insérée dans les paliers lisses 113, vis-à-vis desquels la tige 111 peut glisser.

Le ressort 112 est placé autour de la tige 111 et il est disposé entre les deux faces d'appui 108.

Chaque doigt de fixation 114 saille d'une face d'appui 108 en regard de la cavité 117 de l'autre élément central 104.

Une fenêtre 116 est ménagée dans chaque élément central 104, dans la face longitudinale 105 au voisinage de laquelle la cavité 117 est ménagée, chaque fenêtre 116 débouchant sur une cavité 117.

Les doigts de fixation 114 s'insèrent dans les cavités 117. Une dent 115 saille de chacun des doigts de fixation 114, de sorte à s'étendre dans la fenêtre 116 correspondante.

Les pattes 103 saillent de part et d'autre de la portion centrale 102 et plus particulièrement de la face de prise 109 de chaque élément central 104.

Les pattes 103 sont configurées pour coopérer avec au moins un creux 51 de chacune des dentures 29, ici trois creux 51.

Chaque patte 103 comporte une paroi de dessous 120.

Une rainure 119 est ménagée dans la paroi de dessous 120 de chacune des pattes 103. Ces rainures sont configurées pour chacune s'insérer sur une paroi dentée 11, 25.

Les rainures 119 sont chacune pourvues d'au moins une tige 121 dont le diamètre correspond au diamètre prédéterminé d'une paillette 1. Chaque tige 121 étant configurée pour s'insérer dans un creux 51 de la denture 29 d'une paroi dentée 11, 25. Ici chaque rainure 119 comporte trois tiges 121 configurées pour s'insérer dans trois creux 51.

La paroi de dessous 120 comporte deux faces de dessous 122, 123 disposées de part et d'autre de la rainure 119. La face de dessous 122 est le prolongement de la face de dessous 107 des éléments centraux 104. L'autre face de dessous 123 est en retrait par rapport à la face de dessous 122.

La face de dessous 123 a la même largeur que les tronçons longitudinaux 9, 10.

Chaque patte 103 comporte en outre une portion d'extrémité 126.

Chacune des portions d'extrémité 126 présente une face inclinée 127 configurée pour s'insérer dans le renflement 18 de la rampe de congélation 4. Le renflement 18 est ici formé par la base 17 des parois longitudinales 12, 13, chaque base 17 étant reliée à un tronçon longitudinal 9, 10 de la paroi de fond.

La face inclinée 127 a un agencement semblable à celui de la face interne de la base 17 des parois longitudinales 12, 13 de sorte que, lorsque la traverse 100 est disposée sur la rampe de congélation 4, la face inclinée 127 vient au contact du renflement 18 et par effet de came met en position la traverse 100 sur la rampe 4 : lorsque les parties mobiles de la traverse 100 s'écartent l'une de l'autre, du fait que les faces 127 sont inclinées vers l'extérieur et vers le bas, la coopération des faces inclinées 127 avec les faces internes des bases 17 entraîne la traverse 100 vers le bas et donc vers les dentures 29.

Le ressort 112 sollicite les éléments centraux 104 à s'écarter l'un de l'autre, il sollicite donc la traverse 100 vers une position déployée montrée sur la figure 24.

Dans cette position déployée, la rampe 4 et la traverse 100 sont configurées pour que la traverse 100 soit assujettie à la rampe 4 (figures 26 et 27).

La traverse 100 peut également adopter une position rétractée montrée sur la figure 25.

Dans cette position rétractée, la rampe 4 et la traverse 100 sont configurées pour que la traverse 100 soit libre d'être enlevée de la rampe 4, la longueur de la traverse 100 étant alors plus petite que l'écart entre les parties droites situées au-dessus des bases 17 des parois 12, 13.

Le ressort 112 est alors compressé, les pattes 103 sont rapprochées l'une de l'autre et les rainures 119 présentent un écartement minimal.

L'utilisateur doit appuyer sur chacune des faces de prise 109 pour comprimer le ressort 112 et ainsi passer de la position déployée à la position rétractée. Pour passer de la position rétractée à la position déployée, l'utilisateur doit relâcher la pression exercée sur les faces de prise 109.

Afin de mettre en place la traverse 100 sur la rampe de congélation 4, tel que montré sur la figure 26, l'utilisateur exerce une pression sur les faces de prise 109 de sorte à diminuer l'écartement des rainures 119. La traverse 100 est disposée sur la rampe 4 de sorte que chaque tige 121 des rainures 119 soit mise dans un creux 51 d'une paroi dentée 11, 25. L'utilisateur relâche ensuite la pression exercée sur les faces de prise 109, de sorte que les portions d'extrémités 126 s'insèrent dans les renflements 18.

La face de dessous 107 des éléments centraux 104 ainsi que la face de dessous 122 des pattes 103 s'étendent dans l'espace libre central 5 de la rampe 4.

Lorsque la rampe 4 est remplie de paillettes 1, la traverse 100 est disposée entre des paillettes 1 dont la semence contenue dans le tube 2 est différente.

Dans l'exemple illustré, en plus de coopérer avec la rampe de congélation 4, la traverse 100 est configurée pour coopérer avec le dispositif de transfert 60.

Le dispositif de transfert 60 et la traverse 100 sont configurés pour qu'en présence de la traverse 100 disposée sur la rampe 4 en faisant glisser le dispositif de transfert 60 à partir de la première position extrême avec les patins 67 qui glissent sur les cornières 19, le dispositif de transfert 60 ne peut aller au-delà d'une position où la portion centrale 104 est insérée dans la bouche 78. Ainsi, seules les paillettes situées entre le tronçon transversal sur lequel est disposé le dispositif de transfert 60 dans la première position extrême et la traverse 100 sont récupérées dans le collecteur 70.

Les éléments centraux 104 sont configurés pour que, quand la traverse 100 est disposée sur la rampe de congélation 4, les éléments centraux 104 obturent la bouche 78 du dispositif de transfert 60 (figure 27). Les éléments 104 empêchent alors l'insertion des paillettes 1 de l'autre côté de la traverse 100 dans le logement 71.

La mise en contact de la pelle 72 avec l'une des faces longitudinales 105 des éléments centraux 104 bloque le glissement du dispositif de transfert 60 le long des cornières 19.

Afin de ramasser les paillettes 1 situées de l'autre côté de la traverse, l'utilisateur doit ôter le dispositif de transfert 60, transférer les paillettes 1 dans un gobelet 55, enlever de la rampe 4 la traverse 100 puis disposer à nouveau le dispositif de transfert 60 sur la rampe 4 pour le faire glisser le long des cornières 19.

Dans la variante illustrée sur la figure 28, la traverse 100 comporte en outre de chaque côté deux ailerons 125.

Chaque aileron 125 s'étend de l'une des pattes 103 entre l'une des parois longitudinales 12, 13 et l'une des parois dentées 11, 25 quand la traverse 100 est disposée sur la rampe 4.

Les ailerons 125 s'étendent de manière inclinée vers le haut des pattes 103.

Au contact du dispositif de transfert 60, les ailerons 125 sont disposés vers le collecteur 70, dans le logement 71.

En montant verticalement le dispositif de transfert 60, les ailerons 125 poussent plus profondément les paillettes disposées entre la surface externe 82 des organes anti-retours 73 et la surface interne 81 de la pelle 72 dans le logement 71.

En somme, les ailerons 125 assurent la bonne insertion des paillettes dans le logement 71 du dispositif de transfert 60.

Ainsi, toutes les paillettes contenues dans le logement 71 glissent dans le gobelet 55 lors de leur transfert dans celui-ci.

On va maintenant récapituler les actions effectuées par l'utilisateur pour étaler, ramasser et transférer des paillettes dont la semence provient d'animaux différents.

Tout d'abord, comme précédemment expliqué la rampe de congélation est introduite sur l'élément de support 30. Ensuite, les paillettes 1 sont étalées sur l'élément de support 30 à la main, d'abord les paillettes contenant la semence d'un premier individu, puis les paillettes contenant la semence d'un second individu. Entre les paillettes 1 de contenu différent, l'utilisateur laisse un espace de trois creux 51, correspondant à un espace de trois paillettes 1, sur la platine 31. Il soulève ensuite la rampe de congélation 4 et dispose au niveau de l'espace de trois creux laissé vide la traverse 100. Il place alors la rampe dans un congélateur.

Lorsqu'il sort la rampe de congélation 4 du congélateur, l'utilisateur procède au ramassage des paillettes au moyen du dispositif de transfert 60.

Une fois le dispositif de transfert 60 entré en contact avec la traverse 100, l'utilisateur soulève le dispositif de transfert 60 et transfert les paillettes contenues dans son logement 71 dans le gobelet 55. Ensuite, il enlève de la rampe 4 la traverse 100 pour ramasser avec ce même dispositif de transfert 60 les paillettes 1 restantes sur la rampe 4. Une fois le reste des paillettes 1 ramassé l'utilisateur les dispose dans un autre gobelet 55, évitant ainsi les mélanges entre les paillettes de contenus différents.

Dans des variantes non illustrées :
- les parties mobiles les unes par rapport aux autres configurées pour admettre une position où la traverse est assujettie de façon amovible à ladite rampe de congélation à un emplacement prévu pour recevoir au moins une dite paillette sont différentes, par exemple la sollicitation vers la position déployée se fait par un mécanisme à genouillère ou encore par une tige filetée et des alésages taraudés, permettant par rotation de la tige dans un sens de vissage le rapprochement des éléments centraux, et dans un autre sens leur éloignement ; et/ou la mise en prise de la traverse sur la rampe s'opère différemment que par effet de came, par exemple par pincement ; et/ou
- l'épaisseur de la traverse est différente de l'emplacement de trois paillettes, par exemple l'emplacement d'une seule paillette, de deux paillettes ou de davantage que trois paillettes.

De nombreuses autres variantes sont possibles en fonction des circonstances et l'on rappelle à cet égard que l'invention ne se limite pas aux exemples décrits et représentés, mais qu'elle est définie par les revendications.

## Revendications

1. Ensemble pour manipuler une pluralité de paillettes (1) de conditionnement de semence animale ayant chacune un diamètre prédéterminé et une longueur prédéterminée, comportant une rampe de congélation (4) présentant un rebord et un fond entourant un espace libre central (5), ledit fond comportant deux parois dentées (11, 25) qui s'étendent longitudinalement le long dudit espace central (5), chaque paroi dentée (11, 25) présentant une denture (29) à son sommet comportant une succession de dents (52) et de creux (51), les dentures (29) desdites parois dentées (11, 25) étant identiques avec chaque creux (51) délimité par une surface ayant une courbure selon ledit diamètre prédéterminé, **caractérisé en ce qu'**il comporte en outre une traverse (100) comportant des parties mobiles (103, 104) les unes par rapport aux autres configurées pour admettre une position où ladite traverse (100) est assujettie de façon amovible à ladite rampe de congélation (4) à un emplacement prévu pour recevoir au moins une dite paillette (1).

2. Ensemble selon la revendication 1, **caractérisé en ce que** ladite traverse (100) comporte une portion centrale (102) et deux pattes (103) saillant de part et d'autre de ladite portion centrale (102), lesdites pattes (103) étant configurées pour coopérer avec au moins un creux (51) de chacune des dentures (29), ladite traverse (100) étant configurée pour admettre une position rétractée où lesdites pattes (103) sont rapprochées l'une de l'autre et une position déployée où lesdites pattes (103) sont maintenues à distance l'une de l'autre, ladite rampe et ladite traverse étant configurées pour que la traverse en position déployée soit assujettie à ladite rampe (4) et pour que la traverse (100) en position rétractée soit libre d'être enlevée de ladite rampe (4).

3. Ensemble selon la revendication 2, **caractérisé en ce que** chaque patte (103) comporte une rainure (119) pourvue d'au moins une tige (121), chacune des rainures (119) étant configurée pour s'insérer sur une dite paroi dentée (11, 25) de sorte que chaque dite tige (121) s'insère dans un creux (51) de la denture (29) des parois dentées (11, 25).

4. Ensemble selon l'une quelconque des revendications 2 ou 3, **caractérisé en ce que** ledit rebord de ladite rampe (4) comporte des parois longitudinales (12, 13) comportant chacune une base (17) formant un renflement (18), chaque dite base (17) étant reliée à un tronçon longitudinal (9, 10) d'une paroi de fond (6) que comporte ledit fond de ladite rampe (4).

5. Ensemble selon la revendication 4, **caractérisé en ce que** chaque patte (103) de la traverse (100) comporte une portion d'extrémité (126) configurée pour s'insérer dans ledit renflement (18) dans la position déployée de la traverse (100).

6. Ensemble selon l'une quelconque des revendications 2 à 5 **caractérisé en ce que** la portion centrale (102) de la traverse (100) comporte deux éléments centraux (104) en regard l'un de l'autre et reliés à coulissement, chaque patte (103) saillant d'un desdits éléments centraux (104).

7. Ensemble selon la revendication 6, **caractérisé en ce que** la portion centrale (102) de la traverse (100) comporte en outre un ressort sollicitant lesdits éléments centraux (104) à s'écarter l'un de l'autre, et donc à solliciter ladite traverse (100) vers la position déployée.

8. Ensemble selon l'une quelconque des revendications 1 à 7, **caractérisé en ce que** :
- dans ladite rampe de congélation (4) ledit fond comporte une paroi de fond (6) en forme de cadre rectangulaire entourant l'espace libre central (5) avec deux tronçons transversaux (7, 8) et deux tronçons longitudinaux (9, 10), avec lesdites parois dentées (11, 25) qui s'étendent transversalement à la paroi de fond (6) en bordant intérieurement lesdits tronçons longitudinaux (9, 10), ledit rebord s'étendant transversalement à la paroi de fond (6) et comportant deux parois longitudinales (12, 13) bordant extérieurement lesdits tronçons longitudinaux (9, 10) de la paroi de fond (6) et deux parois transversales (14, 15) bordant extérieurement lesdits tronçons transversaux (7, 8) de la paroi de fond (6), lesdites parois longitudinales (12, 13) comportant chacune à leur sommet une cornière (19) ;
- ledit ensemble comporte en outre un dispositif de transfert (60) de paillettes (1) comportant deux patins latéraux (67) et un collecteur (70) de paillettes (1) délimitant un logement (71) débouchant sur toute sa longueur par une bouche (78), ledit collecteur étant disposé entre les deux patins latéraux (67), ladite rampe de congélation (4), ledit dispositif de transfert (60) et ladite traverse (100) étant configurés : pour que ledit dispositif de transfert (60) admette une première position extrême où il est disposé avec chaque patin latéral (67) qui prend appui sur une dite cornière (19) tandis que ledit collecteur (70) est en surplomb d'un dit tronçon transversal (7, 8) de ladite paroi de fond (6) ; pour admettre une seconde position extrême où ledit dispositif de transfert (60) est disposé avec chaque patin latéral (67) qui prend appui sur une dite cornière (19) tandis que ledit collecteur (70) est en surplomb de l'autre dit tronçon transversal (7, 8) de ladite paroi de fond (6) ; pour qu'en l'absence de ladite traverse (100) à un dit emplacement, en faisant glisser le dispositif de transfert (60) de la première position extrême à la seconde position extrême avec lesdits patins (67) qui glissent sur lesdites cornières (19), ladite pluralité de paillettes (1) initialement disposée sur ladite rampe (4) est récupérée dans ledit collecteur (70) dudit dispositif de transfert (60) ; et pour qu'en présence de ladite traverse (100) à un dit emplacement, en faisant glisser le dispositif de transfert (60) à partir de la première position extrême avec lesdits patins (67) qui glissent sur lesdites cornières (19), le dispositif de transfert (60) ne peut aller au-delà d'une position où ladite portion centrale (104) de ladite traverse (100) est insérée dans ladite bouche (78), grâce à quoi seules les paillettes situées entre ledit tronçon transversal de la paroi de fond et ladite traverse sont récupérées dans le collecteur (70) du dispositif de transfert (60).

9. Ensemble selon la revendication 8, **caractérisé en ce que** chaque patte (103) de ladite traverse (100) comporte au moins un aileron (125) configuré pour s'insérer dans le collecteur (70) de sorte à retenir à l'intérieur du collecteur (70) lesdites paillettes (1) disposées dans le collecteur (70).

10. Ensemble selon la revendication 9, **caractérisé en ce que** chaque aileron (125) s'étend entre l'une des parois longitudinales (12, 13) et l'une des parois dentées (11, 25) de la rampe de congélation (4) quand la traverse (100) est à un dit emplacement.

## Patentansprüche

1. Anordnung zum Handhaben einer Vielzahl von Pailletten (1) zum Verpacken von tierischem Samen, die jeweils einen vorbestimmten Durchmesser und eine vorbestimmte Länge aufweisen, umfassend eine Gefrierrampe (4) mit einem Rand und einen Boden, die einen zentralen Freiraum (5) umgeben, wobei der Rand zwei gezahnte Wände (11, 25) umfasst, die sich in Längsrichtung entlang des zentralen Freiraums (5) erstrecken, wobei jede gezahnte Wand (11, 25) an ihrer Oberseite eine Verzahnung (29) aufweist, die eine Folge von Zähnen (52) und Vertiefungen (51) umfasst, wobei die Verzahnungen (29) der gezahnten Wände (11, 25) mit jeder Vertiefung (51) identisch sind, die durch eine Fläche mit einer Krümmung gemäß dem vorbestimmten Durchmesser begrenzt ist, **dadurch gekennzeichnet, dass** sie ferner einen Querträger (100) umfasst, der relativ zueinander bewegliche Teile (103, 104) umfasst, die so konfiguriert sind, dass sie eine Position ermöglichen, in der der Querträger (100) entfernbar an der Gefrierrampe (4) an einer Stelle befestigt ist, die dafür vorgesehen ist, mindestens eine der Pailletten (1) aufzunehmen.

2. Anordnung nach Anspruch 1, **dadurch gekennzeichnet, dass** der Querträger (100) einen zentralen Abschnitt (102) und zwei Zungen (103) umfasst, die auf beiden Seiten des zentralen Abschnitts (102) vorstehen, wobei die Zungen (103) so konfiguriert sind, dass sie mit mindestens einem Hohlraum (51) jedes der Zähne (29) zusammenwirken, wobei der Querträger (100) so konfiguriert ist, dass er eine zurückgezogene Position, in der die Zungen (103) zusammengebracht werden, und eine ausgefahrene Position gestattet, in der die Zungen (103) voneinander getrennt gehalten werden, wobei die Rampe und der Querträger so konfiguriert sind, dass der Querträger in ausgefahrener Position an der Rampe (4) befestigt ist und dass der Querträger (100) in der zurückgezogenen Position frei ist, um von der Rampe (4) entfernt zu werden.

3. Anordnung nach Anspruch 2, **dadurch gekennzeichnet, dass** jede Zunge (103) eine Nut (119) umfasst, die mit mindestens einer Stange (121) versehen ist, wobei jede der Nuten (119) so konfiguriert ist, dass sie in eine gezahnte Wand (11, 25) passt, so dass jede Stange (121) in eine Vertiefung (51) der Verzahnung (29) der gezahnten Wände (11, 25) passt.

4. Anordnung nach einem der Ansprüche 2 oder 3, **dadurch gekennzeichnet, dass** der Rand der Rampe (4) Längswände (12, 13) umfasst, die jeweils eine Basis (17) umfassen, die eine Ausbuchtung (18) bildet, wobei jede Basis (17) mit einem Längsstück (9, 10) einer Bodenwand (6) verbunden ist, die der Boden der Rampe (4) aufweist.

5. Anordnung nach Anspruch 4, **dadurch gekennzeichnet, dass** jede Zunge (103) des Querträgers (100) einen Endabschnitt (126) aufweist, der so konfiguriert ist, dass er in der ausgefahrenen Position des Querträgers (100) in die Ausbuchtung (18) passt.

6. Anordnung nach einem der Ansprüche 2 bis 5, **dadurch gekennzeichnet, dass** der zentrale Abschnitt (102) des Querträgers (100) zwei zentrale Elemente (104) umfasst, die einander gegenüberliegen und gleitend verbunden sind, wobei jede Zunge (103), die von einem der zentralen Elemente (104) vorsteht.

7. Anordnung nach Anspruch 6, **dadurch gekennzeichnet, dass** der zentrale Abschnitt (102) des Querträgers (100) ferner eine Feder umfasst, die die zentralen Elemente (104) dazu drängt, sich voneinander wegzubewegen, und daher den Querträger (100) in Richtung der ausgefahrenen Position zu drängt.

8. Anordnung nach einem der Ansprüche 1 bis 7, **dadurch gekennzeichnet, dass**:
- in der Gefrierrampe (4) der Boden eine Bodenwand (6) in Form eines rechteckigen Rahmens umfasst, der den zentralen Freiraum (5) mit zwei Querstücken (7, 8) und zwei Längsstücken (9, 10) umgibt, wobei die gezahnten Wände (11, 25), die sich quer zur Bodenwand (6) erstrecken, die Längsstücke (9, 10) innen begrenzen, wobei sich der Rand quer zur Bodenwand (6) erstreckt und zwei Längswände (12, 13), die die Längsstücke (9, 10) der Bodenwand (6) außen begrenzen, und zwei Querwände (14, 15) umfasst, die die Querstücke (7, 8) der Bodenwand (6) außen begrenzen, wobei die Längswände (12, 13) jeweils an ihrer Oberseite ein Winkelprofil (19) umfassen;
- die Anordnung ferner eine Transfervorrichtung (60) für Pailletten (1) umfasst, die zwei seitliche Führungselemente (67) und einen Sammler (70) für Pailletten (1) umfasst, der ein Gehäuse (71) begrenzt, das über seine gesamte Länge in eine Öffnung (78) mündet, wobei der Sammler zwischen den beiden seitlichen Führungselementen (67), der Gefrierrampe (4), der Transfervorrichtung (60) und dem Querträger (100) angeordnet und so konfiguriert ist: dass die Transfervorrichtung (60) eine erste Endposition gestattet, in der sie mit jedem seitlichen Führungselement (67) angeordnet ist, das sich auf einem Winkelprofil (19) abstützt, während der Sammler (70) über eines der Querstücke (7, 8) der Bodenwand (6) hinausragt; dass sie eine zweite Endposition gestattet, in der die Transfervorrichtung (60) mit jedem seitlichen Führungselement (67) angeordnet ist, das sich auf einem Winkelprofil (19) abstützt, während der Sammler (70) über das andere der Querstücke (7, 8) der Bodenwand (6) hinausragt; dass bei Nichtvorhandensein des Querträgers (100) an einer Stelle durch Verschieben der Transfervorrichtung (60) von der ersten Endposition in die zweite Endposition mit den Führungselementen (67), die auf den Winkelprofilen (19) gleiten, eine Vielzahl von Pailletten (1), die anfänglich auf der Rampe (4) angeordnet werden, in den Sammler (70) der Transfervorrichtung (60) geholt werden; und dass bei Vorhandensein des Querträgers (100) an einer Stelle durch Verschieben der Transfervorrichtung (60) aus der ersten Endposition, wobei die Führungselemente (67) auf den Winkelprofilen (19) gleiten, die Transfervorrichtung (60) nicht über eine Position hinausgehen kann, in der der zentrale Abschnitt (104) des Querträgers (100) in die Öffnung (78) eingesetzt ist, wodurch nur die Pailletten, die sich zwischen dem Querstück der Bodenwand und dem Querträger befinden, in den Sammler (70) der Transfervorrichtung (60) geholt werden.

9. Anordnung nach Anspruch 8, **dadurch gekennzeichnet, dass** jeder Schenkel (103) des Querträgers (100) mindestens eine Rippe (125) umfasst, die so konfiguriert ist, dass sie in den Sammler (70) passt, um die im Sammler (70) angeordneten Pailletten (1) im Inneren des Sammlers (70) zu halten.

10. Anordnung nach Anspruch 9, **dadurch gekennzeichnet, dass** sich jede Rippe (125) zwischen einer der Längswände (12, 13) und einer der gezahnten Wände (11, 25) der Gefrierrampe (4) erstreckt, wenn der Querträger (100) sich an einer Stelle befindet.

## Claims

1. Assembly to manipulate a plurality of straws (1) for packaging animal semen each having a predetermined diameter and a predetermined length, comprising a freezing rack (4) having a rim and a bottom surrounding a central free space (5), said bottom comprising two toothed walls (11, 25) which extend longitudinally along said central space (5), each toothed wall (11, 25) having a set of toothing (29) at its apex comprising a succession of teeth (52) and hollows (51), the sets of toothing (29) of said toothed walls (11, 25) being identical with each hollow (51) delimited by a surface having a curvature according to said predetermined diameter, **characterized in that** it further comprises a crosspiece (100) comprising parts (103, 104) which are movable relative to each other and that are configured to take a position in which said crosspiece (100) is removably secured to said freezing rack (4) at a place provided to receive at least one said straw (1).

2. Assembly according to claim 1, **characterized in that** said crosspiece (100) comprises a central portion (102) and two feet (103) projecting at opposite ends of said central portion (102), said feet (103) being configured to cooperate with at least one hollow (51) of each of the sets of toothing (29), said crosspiece (100) being configured to have a retracted position in which said feet (103) are brought towards each other and an extended position in which said feet (103) are held away from each other, said rack and said crosspiece being configured such that the crosspiece in extended position is secured to said rack (4) and such that the crosspiece (100) in retracted position is free to be removed from said rack (4).

3. Assembly according to claim 2, **characterized in that** each foot (103) comprises a groove (119) provided with at least one rod (121), each of the grooves (119) being configured to fit over a said toothed wall (11, 25) such that each said rod (121) inserts into a hollow (51) of the set of toothing (29) of the toothed walls (11, 25).

4. Assembly according to any one of claims 2 or 3, **characterized in that** said rim of said rack (4) comprises longitudinal walls (12, 13) each comprising a base (17) forming a protuberance (18), each said base (17) being connected to a longitudinal section (9, 10) of a bottom wall (6) comprised by said bottom of said rack (4).

5. Assembly according to claim 4, **characterized in that** each foot (103) of the crosspiece (100) comprises an end portion (126) configured to be inserted into said protuberance (18) in the extended position of the crosspiece (100).

6. An assembly according to any one of claims 2 to 5, **characterized in that** the central portion (102) of the crosspiece (100) comprises two central members (104) opposite each other and slidably connected, each foot (103) projecting from one of said central members (104).

7. Assembly according to claim 6, **characterized in that** the central portion (102) of the crosspiece (100) further comprises a spring biasing said central members (104) apart from each other, and thus to bias said crosspiece (100) towards the extended position.

8. Assembly according to any one of claims 1 to 7, **characterized in that**:
- in said freezing rack (4) said bottom comprises a bottom wall (6) in the form of a rectangular frame surrounding the central free space (5) with two transverse sections (7, 8) and two longitudinal sections (9, 10), said toothed walls (11, 25) extending transversely to the bottom wall (6) and internally bordering said longitudinal sections (9, 10), said rim extending transversely to the bottom wall (6) and comprising two longitudinal walls (12, 13) externally bordering said longitudinal sections (9, 10) of the bottom wall (6) and two transverse walls (14, 15) externally bordering said transverse sections (7, 8) of the bottom wall (6), said longitudinal walls (12, 13) each comprising at their apex a gutter portion (19);
- said assembly further comprises a straw (1) transfer device (60) comprising two lateral skids (67) and a straw (1) collector (70) delimiting a housing (71), opening over the whole of its length by a mouth (78), said collector being disposed between the two lateral skids (67), said freezing rack (4), said transfer device (60) and said crosspiece (100) being configured: in order for said transfer device (60) to have a first extreme position in which it is disposed with each lateral skid (67) bearing on a said gutter portion (19) while said collector (70) is located over a said transverse section (7, 8) of said bottom wall (6); to have a second extreme position in which said transfer device (60) is disposed with each lateral skid (67) bearing on a said gutter portion (19) while said collector (70) is located over the other said transverse section (7, 8) of said bottom wall (6); such that in the absence of said crosspiece (100) at a said place, by sliding the transfer device (60) from the first extreme position to the second extreme position with said skids (67) sliding over said gutter portions (19), said plurality of straws (1) initially disposed on said rack (4) is collected in said collector (70) of said transfer device (60); and such that in the presence of said crosspiece (100) at a said place, by sliding the transfer device (60) from the first extreme position with said skids (67) sliding on said gutter portions (19), the transfer device (60) cannot go beyond a position in which said central portion (104) of said crosspiece (100) is inserted into said mouth (78), whereby only the straws located between said transverse section of the bottom wall and said crosspiece are collected in the collector (70) of the transfer device (60).

9. Assembly according to claim 8, **characterized in that** each foot (103) of said crosspiece (100) comprises at least one aileron (125) configured to insert into the collector (70) so as to retain, within that collector (70), said straws (1) disposed in the collector (70).

10. Assembly according to claim 9, **characterized in that** each aileron (125) extends between one of the longitudinal walls (12, 13) and one of the toothed walls (11, 25) of the freezing rack (4) when the crosspiece (100) is at a said place.
